(19) Europäisches Patentamt
European Patent Office
Office européen des brevets

(11) **EP 3 379 035 B1**

(12) **EUROPEAN PATENT SPECIFICATION**

(45) Date of publication and mention
of the grant of the patent:
**12.02.2020 Bulletin 2020/07**

(51) Int Cl.:
***F01D 11/04*** *(2006.01)*      ***F16J 15/40*** *(2006.01)*

(21) Application number: **18151958.8**

(22) Date of filing: **24.08.2016**

(54) **CIRCUMFERENTIAL BACK-TO-BACK ASSEMBLY WITH BIFURCATED FLOW**

UMLAUFENDE PARALLELANORDNUNG MIT VERZWEIGTER STRÖMUNG

ENSEMBLE CIRCONFÉRENTIEL DOS-À-DOS À ÉCOULEMENT BIFURQUÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.09.2015 US 201514845947**

(43) Date of publication of application:
**26.09.2018 Bulletin 2018/39**

(62) Document number(s) of the earlier application(s) in
accordance with Art. 76 EPC:
**16842611.2 / 3 337 991**

(73) Proprietor: **Stein Seal Company
Kulpsville, PA 19443 (US)**

(72) Inventor: **GARRISON, Glen M.
Perkiomenville, PA 18074 (US)**

(74) Representative: **Schütte, Gearoid
Cruickshank
8a Sandyford Business Centre
Sandyford
Dublin 18 (IE)**

(56) References cited:
**US-A- 6 142 478**     **US-A1- 2008 284 105**
**US-A1- 2011 049 809**     **US-A1- 2015 049 968**

**Description**

**1. Technical Field**

The invention generally relates to a circumferential seal assembly with bifurcated hydrodynamic flow for use within a gas turbine engine and more particularly is concerned, for example, with a pair of annular seal rings separately disposed within an annular seal housing about a rotatable runner attached to a shaft, wherein the runner further includes a plurality of stepped hydrodynamic grooves which separate and direct flow onto each annular seal ring to form a pair of thin-film layers sealing one compartment from another compartment.

**2. Background Art**

Turbine engines typically include a housing with a plurality of compartments therein and a rotatable shaft that passes through adjoining compartments separately including a gas and a lubricant. Leakage of a lubricant from one compartment into another compartment containing a gas could adversely affect performance and function of a gas turbine. Leakage of a gas from one compartment into another compartment containing a lubricant is likewise detrimental. As such, adjoining compartments must be isolated from one another by means of a sealing system that prevents one fluid, either a lubricant or a gas, from migrating along a rotatable shaft and entering a compartment so as to mix with another fluid therein.

In the case of an aircraft engine, leakage of a lubricant or a gas across a seal into a neighboring compartment may cause oil coking or an engine fire. Oil coke is a byproduct formed when an oil lubricant and a gas mix at a temperature that chemically alters the oil. Oil coke can foul sealing surfaces thereby degrading bearing lubrication and impairing the integrity of a seal. It is important in similar applications, not just aircraft engines, that a lubricant be isolated within a lubricant sump and that a seal around a rotating shaft not allow a lubricant to escape the sump or a hot gas to enter the sump. Many applications will include either a circumferential seal or a face seal to prevent mixing of an oil lubricant and a hot gas; however, circumferential shaft seals are the most widely used under the above-noted conditions.

Garrison in U.S. Patent Publication Nos. 2015/0049968 and 2011/0049809 and Vasagar in U.S. Patent Publication No. 2008/0284105 describe circumferential seal systems and Pecht in U.S. Patent No. 6,142,478 describes a face seal design, each capable of sealing between compartments to prevent mixture of fluids. These systems include grooves which form a non-contact seal via a thin-film layer.

Presently known seal designs are problematic when both adjoining compartments are at a low pressure. The absence of a significant pressure differential between compartments does not permit formation of a thin-film layer adequately capable of preventing migration of a fluid along the interface between a seal ring and a shaft in circumferential applications.

Presently known circumferential seal designs are particularly problematic when used in conjunction with a translatable runner. The temperatures and/or mechanical loads within a turbine engine often cause a runner, and sealing surface thereon, to translate along the axial dimension of an engine. The result is a sealing interface that is difficult to optimize over the operational range of a turbine engine.

Accordingly, what is required is a circumferential seal assembly interposed between a pair of compartments that minimizes degradation to and/or failure of a seal between a rotatable runner and a pair of seal elements.

**3. Disclosure of the Invention**

An object of the invention is to provide a circumferential seal assembly interposed between a pair of compartments that minimizes degradation to and/or failure of a seal between a rotatable runner and a pair of seal elements.

The scope of the invention is solely defined by the appended claims, irrespective of the content of the present disclosure.

In accordance with some embodiments of the invention, the circumferential back-to-back seal assembly includes an annular seal housing, a first annular seal ring, a second annular seal ring, a rotatable runner, and a plurality of groove structures. The annular seal housing is interposed between a pair of compartments. The annular seal housing has at least one inlet. The first and second annular seal rings are separately disposed within the annular seal housing. A gas is communicable between the first and second annular seal rings via the inlet(s). The first and second annular seal rings are disposed around the rotatable runner. The groove structures are disposed along an outer annular surface of the rotatable runner. The gas is communicable onto the groove structures. Each groove structure separates the gas so that a first portion of the gas is directed onto the first annular seal ring to form a first thin-film layer between the rotatable runner and the first annular seal ring and a second portion of the gas is directed onto the second annular seal ring to form a second thin-film layer between the rotatable runner and the second annular seal ring. Each groove structure has at least two grooves. Each groove includes at least two adjoining steps wherein each adjoining step has a base disposed at a depth (h). The depth (h) decreases from at least one said adjoining step to another said adjoining step in the direction opposite to rotation. A shoulder is disposed between two adjoining steps whereby the shoulder locally redirects the gas outward toward the first annular seal ring or the second annular seal ring so that flow of the gas is turbulent.

In accordance with some embodiments of the invention, the circumferential back-to-back seal assembly includes an annular seal housing, a first annular seal ring, a second annular seal ring, a rotatable runner, and a plurality of groove structures. The annular seal housing is interposed between a pair of compartments. The first and second annular seal rings are separately disposed within the annular seal housing. The rotatable runner includes a plurality of through holes. The first and second annular seal rings are disposed around the rotatable runner. The groove structures are disposed along an outer annular surface of the rotatable runner. Each groove structure extends radially inward into the rotatable runner from the outer annular surface. A gas is communicable onto the groove structures via the through holes. Each groove structure separates the gas so that a first portion of the gas is directed onto the first annular seal ring to form a first thin-film layer between the rotatable runner and the first annular seal ring and a second portion of the gas is directed onto the second annular seal ring to form a second thin-film layer between the rotatable runner and the second annular seal ring. Each groove structure has at least two grooves. Each groove includes at least two adjoining steps wherein each adjoining step bounded by the outer annular surface and a base disposed at a depth (h). The line intersects the outer annular surface at an inlet end and an outlet end of the groove. Each base (63a-63e) is non-planar whereby the depth (h) of each base (63a-63e) represents either a maximum or an average. The depth (h) decreases from at least one said adjoining step to another said adjoining step in the direction opposite to rotation. The shoulder is an abrupt change or discontinuity of the depth (h) between two adjoining steps. Each groove has a length (L) and disposed along the rotatable runner with a runner radius ($r_r$). Each groove is outward opening and curved at the outer annular surface. Each adjoining step is defined by a distance ratio (R) less than 1 determined by the equation

$$R = \frac{r - h}{r_r}$$

where

$$r = \sqrt{r_r^2 - \left(\frac{L}{2}\right)^2}.$$

Each groove has one adjoining step with a minimum depth ($h_{min}$) and another adjoining step with a maximum depth ($h_{max}$). The distance ratio (R) for each groove includes a lower distance ratio ($R_L$) when the depth (h) equals the maximum depth ($h_{max}$) and an upper distance ratio ($R_U$) when the depth (h) equals the minimum depth ($h_{min}$). The distance ratio (R) for each adjoining step (62a-62e) within the range from the lower distance ratio ($R_L$) to the upper distance ratio ($R_U$).

In accordance with other embodiments of the invention, the depth (h) increases from at least one adjoining step to another adjoining step in the direction opposite to rotation.

In accordance with other embodiments of the invention, the seal assembly further includes a plurality of springs. The springs are disposed between and directly contact the first and second annular seal rings. The springs separate the first and second annular seal rings to form a gap. The gas traverses the gap before communication onto the groove structures.

In accordance with other embodiments of the invention, the seal assembly further includes a plurality of springs. The springs are disposed between and directly contact the first and second annular seal rings. The springs separate the first and second annular seal rings.

In accordance with other embodiments of the invention, a center ring is disposed within the annular seal housing between the first annular seal ring and the second annular seal ring.

In accordance with other embodiments of the invention, the seal assembly further includes a center ring and a plurality of springs. The center ring is disposed within the annular seal housing between the first and second annular seal rings. The center ring includes a plurality of holes communicable with the inlet(s) that allow the gas to traverse the holes before communication onto the groove structures. The springs are interposed between the center ring and each of the first and second annular seal rings. The springs separate the first and second annular seal rings away from the center ring. In accordance with other embodiments of the invention, the seal assembly further includes a center ring and a plurality of springs. The center ring is disposed within the annular seal housing between the first and second annular seal rings. The springs are interposed between the center ring and each of the first and second annular seal rings. The springs separate the first and second annular seal rings away from the center ring so that the gas flows around the center ring before communication onto the groove structures.

In accordance with other embodiments of the invention, the seal assembly further includes a center ring and a plurality of springs. The center ring is disposed within the annular seal housing between the first and second annular seal rings. The springs are interposed between the center ring and each of the first and second annular seal rings. The springs separate the first and second annular seal rings away from the center ring.

In accordance with other embodiments of the invention, the grooves are disposed about and communicable with an apex. The grooves are disposed diagonally with respect to rotational direction of the rotatable runner.

In accordance with other embodiments of the invention, the grooves are disposed about and communicable with an annular groove along the outer annular surface of the rotatable runner. The grooves are disposed diagonally with respect to rotational direction of the rotatable runner.

In accordance with other embodiments of the invention, the grooves are separately disposed about a central axis aligned adjacent to the first and second annular seal rings. The grooves are disposed diagonally with respect to rotational direction of the rotatable runner.

In accordance with other embodiments of the invention, the grooves are communicable with a feed groove. The feed groove directs the gas into the grooves.

In accordance with other embodiments of the invention, at least one groove structure has a secondary groove structure.

In accordance with other embodiments of the invention, the grooves vary either axially or circumferentially lengthwise.

In accordance with other embodiments of the invention, at least four grooves are separately disposed about a central axis aligned adjacent to the first and second annular seal rings. The grooves are disposed diagonally with respect to rotational direction of the rotatable runner. At least two grooves are communicable with a first feed groove and at least two other grooves are communicable with a second feed groove. The first and second feed grooves separate the gas into the respective grooves.

In accordance with other embodiments of the invention, the grooves are disposed about a central axis aligned adjacent to the first and second annular seal rings. The grooves are disposed substantially parallel with respect to rotational direction of the rotatable runner. The grooves are communicable with a feed groove. The feed groove directs the gas into the grooves.

In accordance with other embodiments of the invention, at least one groove is tapered widthwise.

In accordance with other embodiments of the invention, at least one groove has a constant width.

In accordance with other embodiments of the invention, adjacent groove structures vary widthwise.

In accordance with other embodiments of the invention, the grooves are separately disposed about a central axis aligned adjacent to the first and second annular seal rings. Adjacent groove structures vary in number of grooves.

In accordance with other embodiments of the invention, the annular seal housing includes a windback thread adjacent to the compartment including a lubricant. The windback thread directs the lubricant away from the first and second annular seal rings.

In accordance with other embodiments of the invention, a plurality of slots positioned along the rotatable runner cooperate with the windback thread to sling a lubricant away from the first and second annular seal rings.

Several exemplary advantages are mentionable. The invention facilitates a circumferential seal along a rotatable/translatable runner between a pair of low pressure compartments that minimizes mixing of a lubricant and a gas within adjacent compartments. The invention facilitates a circumferential seal along a rotatable/translatable runner between a pair of compartments that minimizes translational effects on sealing properties. The invention minimizes contamination to a paired arrangement of annular seal rings by a lubricant originating from a compartment. The invention minimizes wear along a back-to-back arrangement of sealing rings within a seal assembly.

The above and other objectives, features, and advantages of the preferred embodiments of the invention will become apparent from the following description read in connection with the accompanying drawings, in which like reference numerals designate the same or similar elements.


## 4. Brief Description of the Drawings

Additional aspects, features, and advantages of the invention will be understood and will become more readily apparent when the invention is considered in the light of the following description made in conjunction with the accompanying drawings:

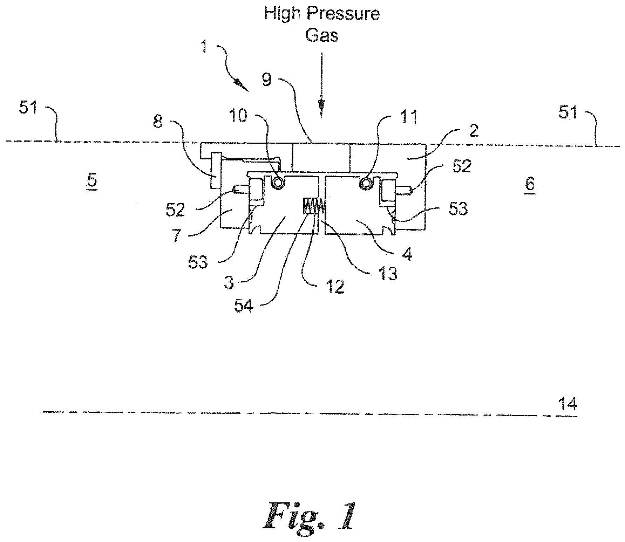

FIG. 1 is an enlarged cross section view illustrating an annular seal assembly including a pair of annular seal rings separated by a gap within a seal housing disposed about a runner attached to a shaft (cross section of annular seal assembly below centerline, runner, and shaft not shown) rotatable about a centerline within a turbine engine in accordance with an embodiment of the invention;

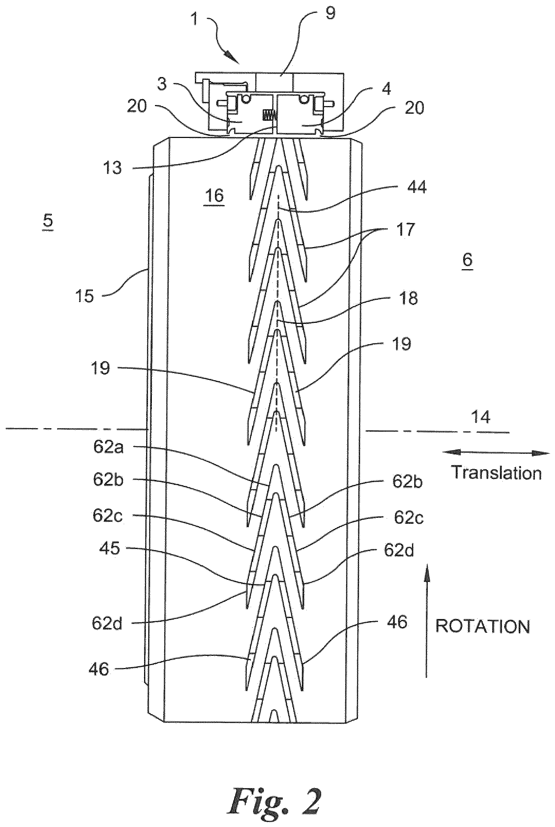

FIG. 2 is a partial cross section view illustrating an annular seal assembly including a pair of annular seal rings separated by a gap within a seal housing disposed about a rotatable runner attached to a shaft (cross section of annular seal assembly below runner and shaft not shown) wherein an outer annular surface along the runner includes a plurality of groove structures separately disposed thereon whereby each groove includes at least two steps and each groove structure communicates with both seal rings in accordance with an embodiment of the invention;

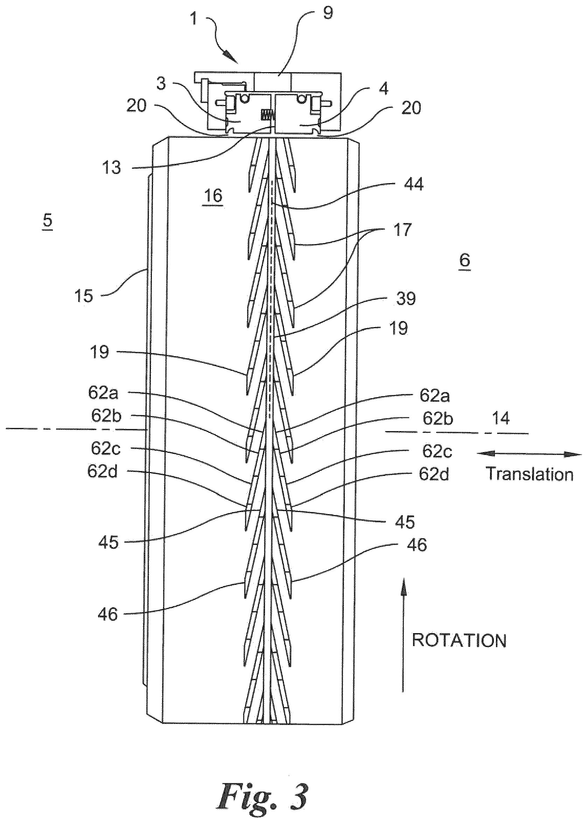

FIG. 3 is a partial cross section view illustrating an annular seal assembly including a pair of annular seal rings separated by a gap within a seal housing disposed about a rotatable runner attached to a shaft (cross section of annular seal assembly below runner and shaft not shown) wherein an outer annular surface along the runner includes a plurality of groove structures communicable with a single annular groove thereon whereby each groove includes at least two steps and each groove structure communicates with both seal rings in accordance with an embodiment of the invention;

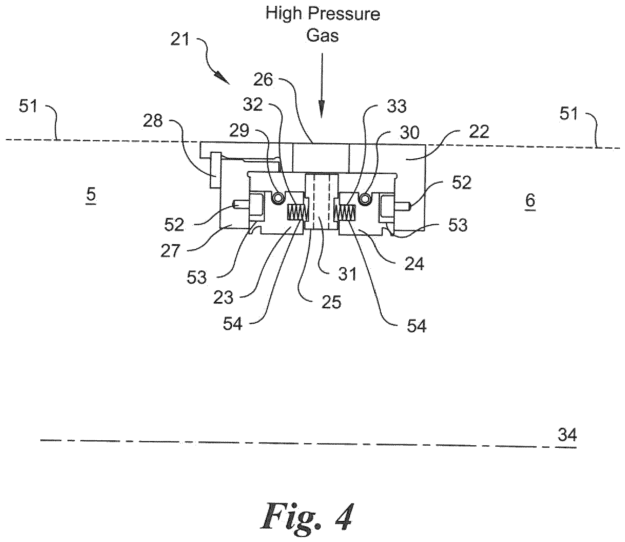

FIG. 4 is an enlarged cross section view illustrating an annular seal assembly including a pair of annular seal rings separated by a center ring within a seal housing disposed about a runner attached to a shaft (cross section of annular seal assembly below centerline, runner, and shaft not shown) rotatable about a centerline within a turbine engine in accordance with an embodiment of the invention;

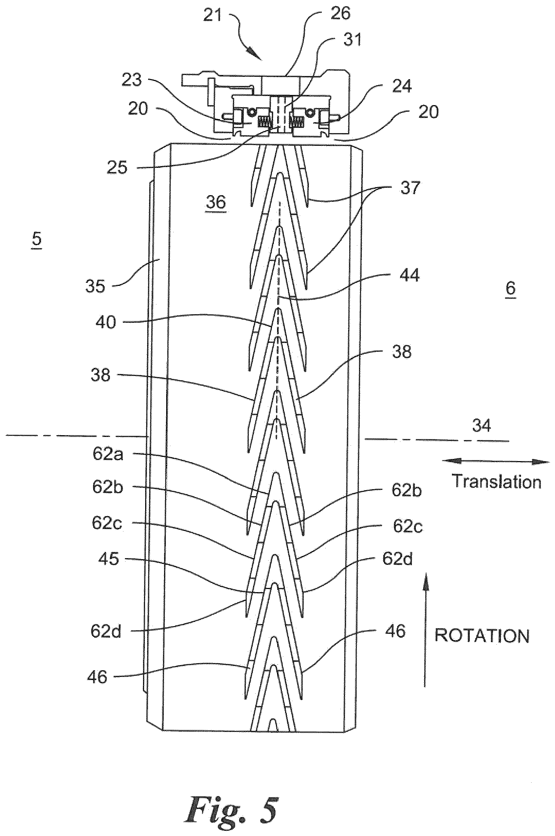

FIG. 5 is a partial cross section view illustrating an annular seal assembly including a pair of annular seal rings separated by a center ring within a seal housing disposed about a rotatable runner attached to a shaft (cross section of annular seal assembly below runner and shaft not shown) wherein an outer annular surface along the runner includes a plurality of groove structures separately disposed thereon whereby each groove includes at least two steps and each groove structure communicates with both seal rings in accordance with an embodiment of the invention;

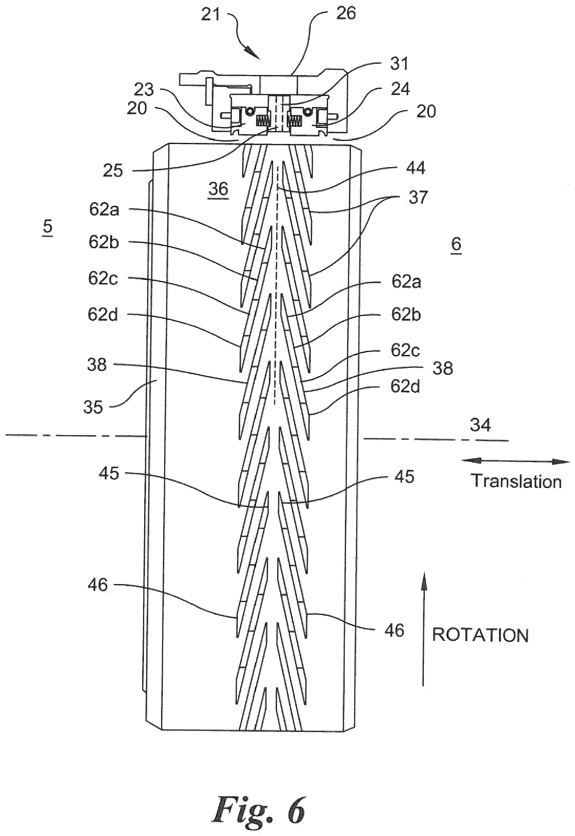

FIG. 6 is a partial cross section view illustrating an annular seal assembly including a pair of annular seal rings separated by a center ring within a seal housing disposed about a rotatable runner attached to a shaft (cross section of annular seal assembly below runner and shaft not shown) wherein an outer annular surface along the runner includes a plurality of bifurcated groove structures separately disposed thereon whereby each groove includes at least two steps and each pair of non-intersecting groove structures communicates with both seal rings in accordance with an embodiment of the invention;

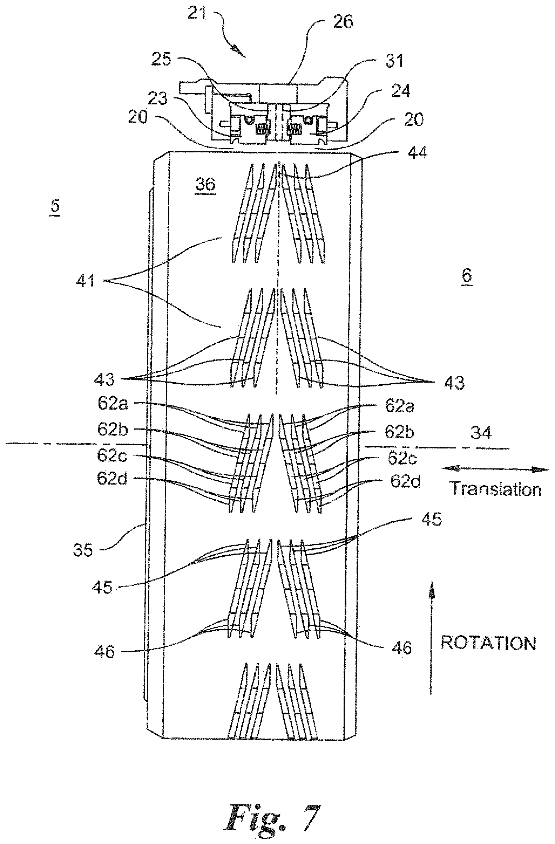

FIG. 7 is a partial cross section view illustrating an annular seal assembly including a pair of annular seal rings separated by a center ring within a seal housing disposed about a rotatable runner attached to a shaft (cross section of annular seal assembly below runner and shaft not shown) wherein an outer annular surface along the runner includes a plurality of bifurcated multi-groove structures separately disposed thereon whereby each groove includes at least two steps and each pair of non-intersecting multi-groove structures communicates with both seal rings in accordance with an embodiment of the invention;

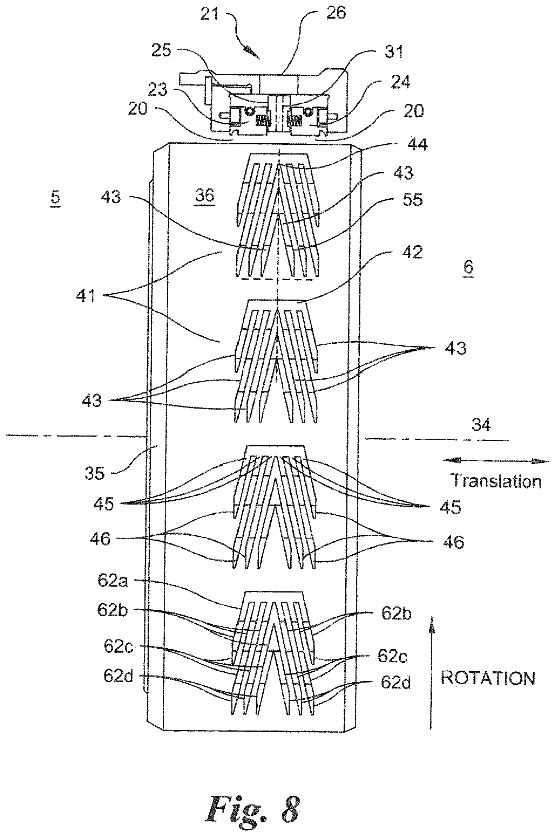

FIG. 8 is a partial cross section view illustrating an annular seal assembly including a pair of annular seal rings separated by a center ring within a seal housing disposed about a rotatable runner attached to a shaft (cross section of annular seal assembly below runner and shaft not shown) wherein an outer annular surface along the runner includes a plurality of multi-groove structures separately disposed thereon whereby each groove includes at least two steps and each multi-groove structure communicates with both seal rings in accordance with an embodiment of the invention;

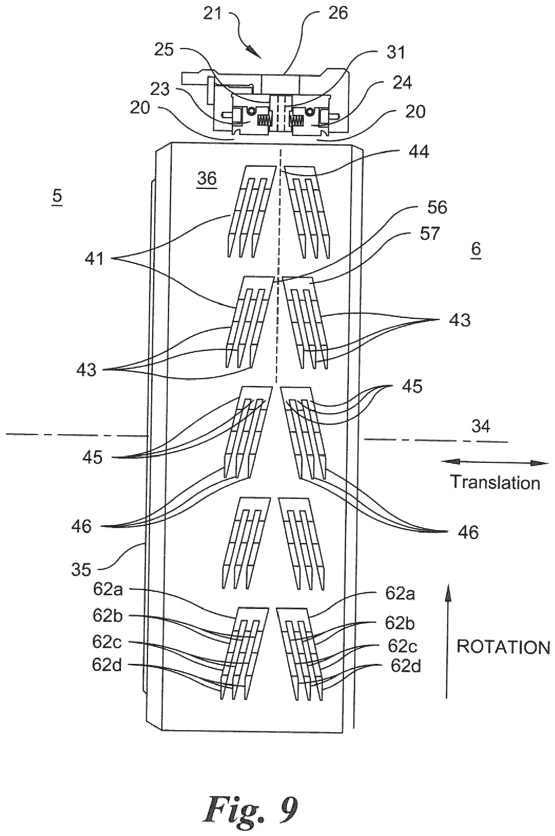

FIG. 9 is a partial cross section view illustrating an annular seal assembly including a pair of annular seal rings separated by a center ring within a seal housing disposed about a rotatable runner attached to a shaft (cross section of annular seal assembly below runner and shaft not shown) wherein an outer annular surface along the runner includes a plurality of bifurcated multi-groove structures separately disposed thereon whereby the multi-grooves form two separate substructures within each multi-groove structure, each groove includes at least two steps, and each multi-groove structure communicates with both seal rings in accordance with an embodiment of the invention;

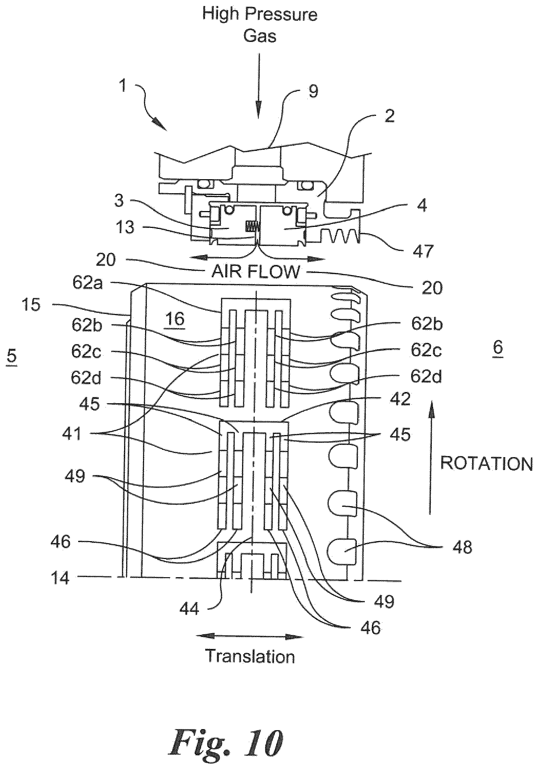

FIG. 10 is a partial cross section view illustrating an annular seal assembly including a pair of annular seal rings separated by a gap within a seal housing with an optional windback thread disposed about a rotatable runner attached to a shaft (cross section of annular seal assembly and runner below centerline and shaft not shown) and optional slots positioned along one end of the rotatable runner adjacent to the windback thread wherein an outer annular surface along the runner includes a plurality of multi-groove structures separately disposed thereon whereby each groove includes at least two steps and each multi-groove structure communicates with both seal rings in accordance with an embodiment of the invention;

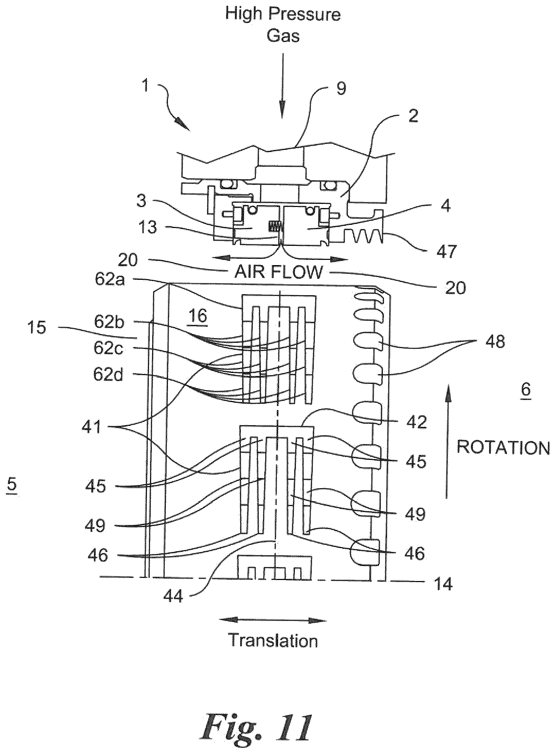

FIG. 11 is a partial cross section view illustrating an annular seal assembly including a pair of annular seal rings separated by a gap within a seal housing with an optional windback thread disposed about a rotatable runner attached to a shaft (cross section of annular seal assembly and runner below centerline and shaft not shown) and optional slots positioned along one end of the rotatable runner adjacent to the windback thread wherein an outer annular surface along the runner includes a plurality of multi-groove structures separately disposed thereon whereby the grooves are tapered, each groove includes at least two steps, and each multi-groove structure communicates with both seal rings in accordance with an embodiment of the invention;

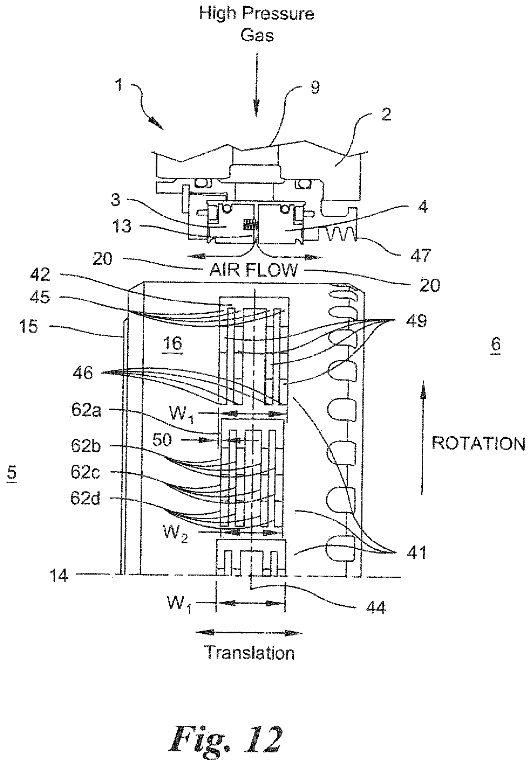

FIG. 12 is a partial cross section view illustrating an annular seal assembly including a pair of annular seal rings separated by a gap within a seal housing with an optional windback thread disposed about a rotatable runner attached to a shaft (cross section of annular seal assembly and runner below centerline and shaft not shown) wherein an outer annular surface along the runner includes a plurality of multi-groove structures separately disposed thereon whereby the width of adjacent multi-groove structures vary, each groove includes at least two steps, and each multi-groove structure communicates with both seal rings in accordance with an embodiment of the invention;

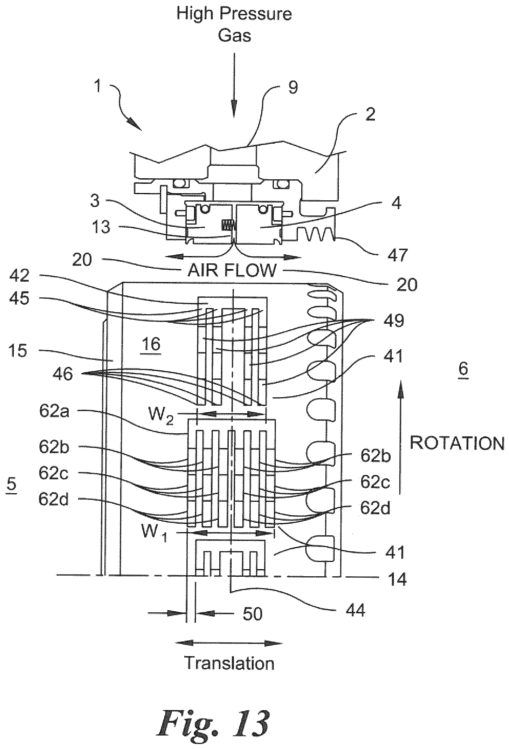

FIG. 13 is a partial cross section view illustrating an annular seal assembly including a pair of annular seal rings separated by a gap within a seal housing with an optional windback thread disposed about a rotatable runner attached to a shaft (cross section of annular seal assembly and runner below centerline and shaft not shown) wherein an outer annular surface along the runner includes a plurality of multi-groove structures separately disposed thereon whereby the number of grooves within adjacent multi-groove structures vary, each groove includes at least two steps, and each multi-groove structure communicates with both seal rings in accordance with an embodiment of the invention;

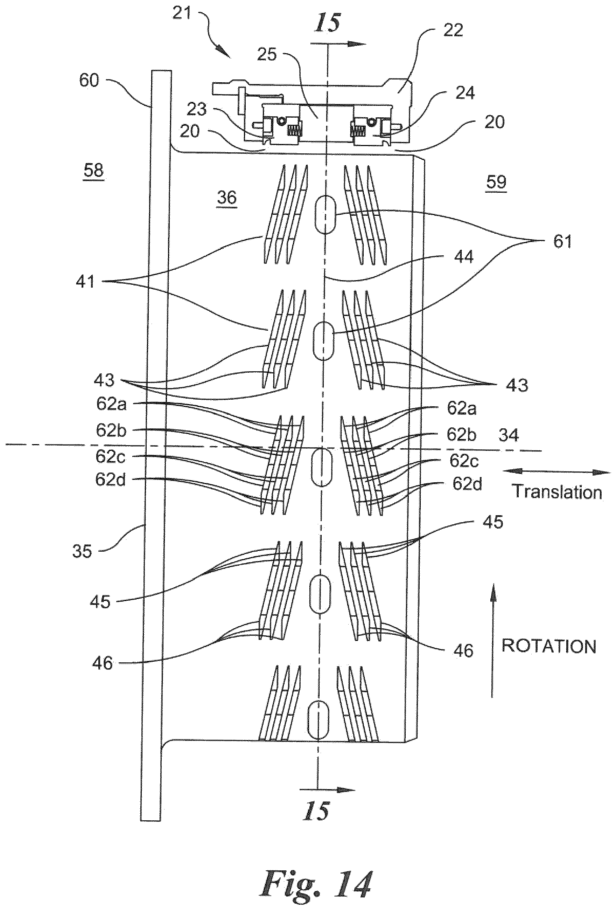

FIG. 14 is a partial cross section view illustrating an annular seal assembly including a pair of annular seal rings separated by a center ring within a seal housing disposed about a rotatable runner attached to a shaft (cross section of annular seal assembly below runner and shaft not shown) wherein an outer annular surface along the runner includes a plurality of bifurcated multi-groove structures separately disposed thereon whereby each groove includes at least two steps, each multi-groove structure communicates with both seal rings, and a plurality of through holes are disposed along the rotatable runner in accordance with an embodiment of the invention;

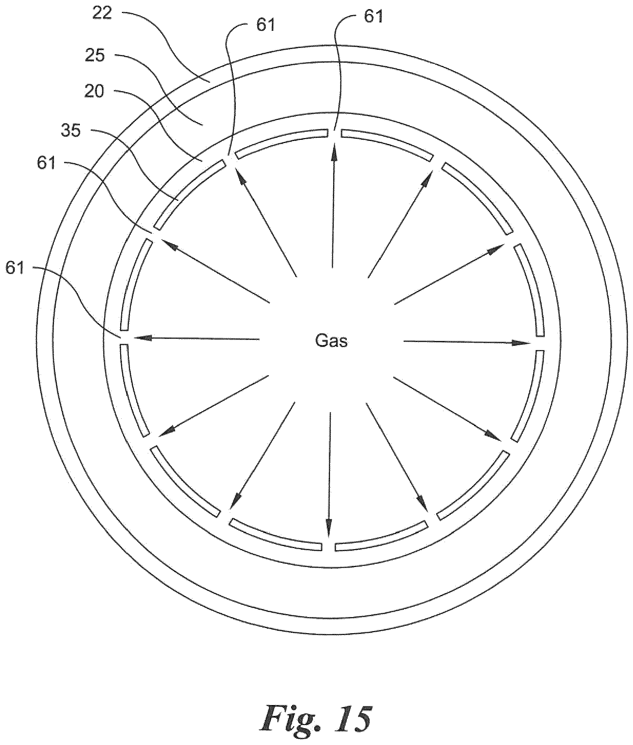

FIG. 15 is a cross section view illustrating the annular seal housing, the center ring, and the rotatable runner with through holes wherein the holes communicate a gas through the rotatable runner and onto the outer annular surface of the rotatable runner so that the gas enters the stepped grooves along the rotatable runner for redirection onto the inner annular surface of a first annular seal ring and a second annular seal ring in accordance with an embodiment of the invention;

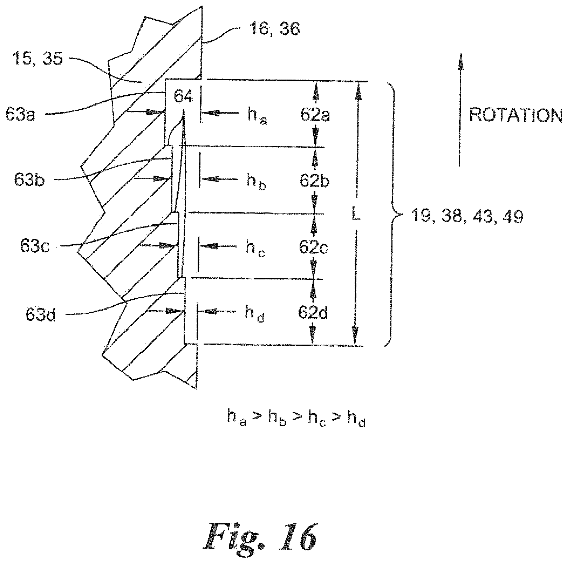

FIG. 16 is a cross section view illustrating a stepped groove with an exemplary profile whereby the depth of each adjoining step decreases in the direction opposite to rotation in accordance with an embodiment of the invention;

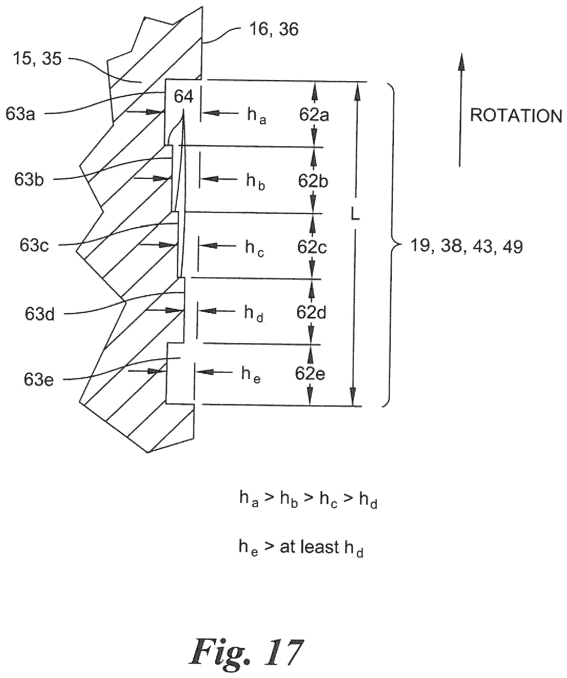

FIG. 17 is a cross section view of a rotatable runner illustrating an alternate stepped groove whereby the depth of at least one adjoining step decreases in the direction opposite to rotation and the depth of at least one adjoining step increases in the direction opposite to rotation in accordance with an embodiment of the invention;

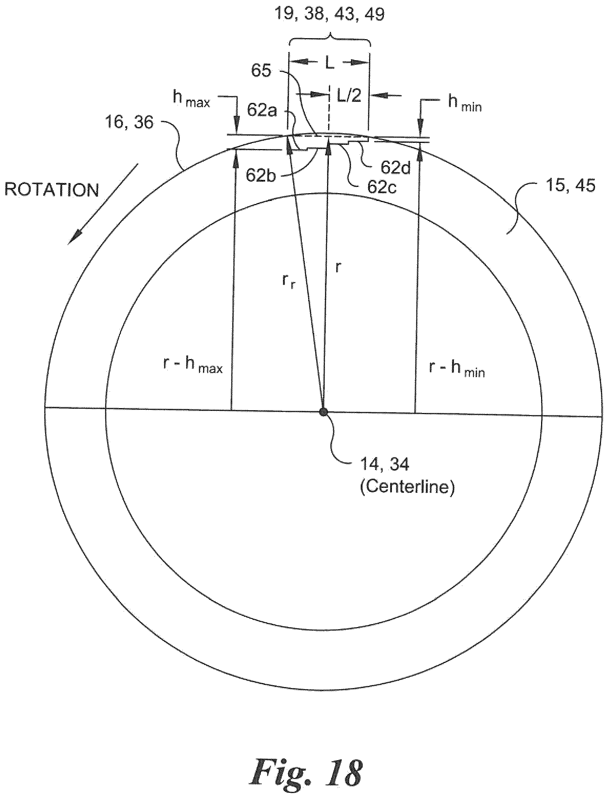

FIG. 18 is a cross section view illustrating dimensions along a rotatable runner and a stepped groove for calculating the distance ratio ($R$) based on the adjusted radial distance ($r - h$) over the runner radius ($r_r$) whereby the upper distance ratio ($R_U$) corresponds to the shallowest step (($r - h_{min}$) / $r_r$) and the lower distance ratio ($R_L$) corresponds to the deepest step (($r - h_{max}$) / $r_r$);

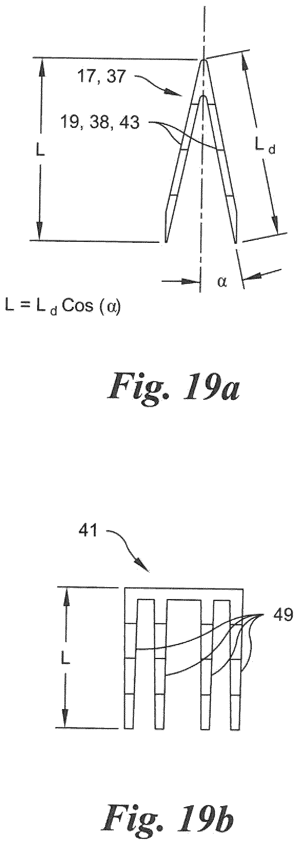

FIG. 19a is an enlarged view illustrating the length ($L$) of a groove structure with stepped grooves aligned diagonal to the direction of rotation in accordance with an embodiment of the invention;

FIG. 19b is an enlarged view illustrating the length ($L$) of a groove structure with stepped grooves aligned along the direction of rotation in accordance with an embodiment of the invention; and

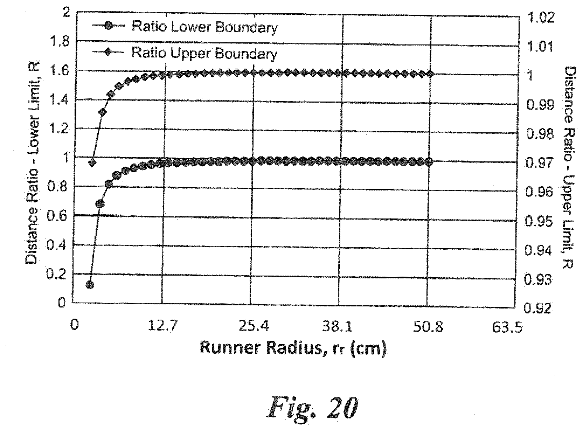

FIG. 20 is an exemplary plot illustrating the distance ratio ($R$) for rotatable runners with a radius from 2.54-cm (1-inches) to 50.8-cm (20-inches) whereby the upper limit of the distance ratio ($R_U$) corresponds to a length ($L$) of 1.27-cm (0.5-inches) and a minimum step depth ($h_{min}$) of 0.0000254-cm (0.00001-inches) and the lower limit of the distance ratio ($R_L$) corresponds to a length ($L$) of 4.953-cm (1.95-inches) and a maximum step depth ($h_{max}$) of 0.254-cm (0.1-inches).

## 5. Modes for carrying out the Invention

Reference will now be made in detail to several embodiments of the invention that are illustrated in the accompanying drawings. Wherever possible, same or similar reference numerals are used in the drawings and the description to refer to the same or like parts. The drawings are in simplified form and are not to precise scale.

While features of various embodiments are separately described throughout this document, it is understood that two or more such features are combinable to form other embodiments.

Referring now to FIG. 1, a seal assembly 1 is shown with an annular seal housing 2, a first annular seal ring 3, and a second annular seal ring 4, each disposed so as to be circumferentially arranged about a rotatable runner 15 (not shown). Components are composed of materials understood in the art. The rotatable runner 15 (see FIG. 2) is an element known within the art attached to a rotatable shaft. The rotatable runner 15 is rotatable within a turbine engine via the shaft. A seal is formed along the rotatable runner 15 by each annular seal ring 3, 4. The annular seal housing 2, annular seal rings 3, 4, and rotatable runner 15 are aligned along and disposed about a centerline 14, often coinciding with a rotational axis within a turbine engine. The annular seal housing 2 is attached to components comprising the housing structure 51 (generally shown) of a turbine engine fixing the annular seal housing 2 thereto. The housing structure 51 is stationary and therefore non-rotating. The housing structure 51, seal assembly 1, and the rotatable runner 15 generally define at least a first compartment 5 and a second compartment 6. The configuration of the housing structure 51 is design dependent; however, it is understood for purposes of the present invention that the housing structure 51 cooperates with the seal assembly 1 and rotatable runner 15 to define two separate compartments whereby a gas resides at a low pressure within one such compartment 5 and a lubricant resides at low pressure within another compartment 6.

The annular seal housing 2 generally defines a pocket within which the annular seal rings 3, 4 reside. The annular seal housing 2 has a U-shaped cross-section opening inward toward the centerline 14. One end of the annular seal housing 2 could include an insert 7 and a retaining ring 8 which allow for assembly/disassembly of the annular seal rings 3, 4 onto the annular seal housing 2. The annular seal rings 3, 4 could be fixed to the annular seal housing 2 via means known within the art to limit or to prevent relative rotational motion between the annular seal rings 3, 4 and the annular seal housing 2. In one non-limiting example, a pair of anti-rotation pins 52 is secured to the annular seal housing 2 to separately engage a pocket 53 along each of the first and second annular seal rings 3, 4. Interaction between the anti-rotation pin 52 and the pocket 53 functions as a positive stop to restrict rotation of each of the first and second annular seal rings 3, 4 with respect to the annular seal housing 2.

The first and second annular seal rings 3, 4 are ring-shaped elements. Each annular seal ring 3, 4 could be composed of at least two arcuate segments which form a generally circular-shaped ring when assembled about a rotatable runner 15. The segments of the first and second annular seal rings 3, 4 allow for radial expansion and contraction by the respective annular seal rings 3, 4 about a rotatable runner 15. Each annular seal ring 3, 4, is generally biased toward a rotatable runner 15 via a compressive force applied by a garter spring 10, 11. The garter spring 10, 11 could contact the outer circumference of the respective annular seal ring 3, 4 and apply a compressive force inward toward the rotatable runner 15.

A plurality of springs 12 could be separately positioned between the annular seal rings 3, 4. The springs 12 could be evenly spaced about the circumference of the annular seal rings 3, 4 so as to exert a generally uniform separation force onto the seal rings 3, 4. The springs 12 could be a coil-type device which generally resists compression. Each spring 12 could be attached or fixed to one annular seal ring 3, 4. For example, one end of each spring 12 could be partially recessed within a pocket 54 along at least one annular seal ring 3, 4. Each spring 12 should be sufficiently long so as to at least partially compress when assembled between the annular seal rings 3, 4. This arrangement ensures that each spring 12 exerts a force onto the annular seal rings 3, 4 causing the annular seal rings 3, 4 to separate, thereby pressing the annular seal rings 3, 4 onto opposite sides of the annular seal housing 2. The separation force exerted by the compression spring 12 ensures a gap 13 between the annular seal rings 3,4.

At least one inlet 9 is disposed along an outer wall of the annular seal housing 2. The inlet(s) 9 is/are positioned so as to at least partially overlay the gap 13 between the annular seal rings 3, 4. Two or more inlets 9 could be uniformly positioned about the circumference of the annular seal housing 2. Each inlet 9 is a pathway through which a gas is communicated into and through the gap 13 between the annular seal rings 3, 4.

Although various embodiments are described including a gap 13, it is understood that the gap 13 as described in FIG. 1 is an optional feature and that such embodiments could include a center ring 25 with optional gaps or optional holes 31 as shown in FIG. 4.

Referring now to FIG. 2, a seal assembly 1 is shown in cross-sectional form disposed about a rotatable runner 15, the latter illustrated in side-view form. The rotatable runner 15 includes a plurality of groove structures 17. The groove structures 17 are arranged circumferentially along the outer annular surface 16 of the rotatable runner 15 immediately adjacent to the seal assembly 1. The groove structures 17 are positioned so as to communicate a gas onto the annular seal rings 3, 4 as the rotatable runner 15 rotates with respect to the seal assembly 1. In some embodiments, it might be advantageous for adjacent grooves structures 17 to partially overlap as represented in FIG. 2. In other embodiments, adjacent groove structures 17 could be arranged in an end-to-end configuration or with a separation between the end of one groove structure 17 and the start of the next groove structure 17.

Each groove structure 17 further includes a pair of diagonal grooves 19 disposed about a central axis 44 circumferentially along the outer annular surface 16 of the rotatable runner 15. The diagonal grooves 19 could be aligned symmetrically or non-symmetrically about the central axis 44. Each diagonal groove 19 is a channel, depression, flute, or the like disposed along the outer annular surface 16. Although the diagonal grooves 19 are represented as linear elements, it is understood that other designs are possible including multi-linear and non-linear configurations. The central axis 44 could align with the gap 13 between the first and second annular seal rings 3, 4 or reside adjacent to the first and second annular seal rings 3, 4 to allow communication of a gas onto the groove structure 17 over the translational range of the rotatable runner 15. The diagonal grooves 19 are oriented so that the top of the left side extends toward the right and the top of the right side extends toward the left. The inward oriented ends of the diagonal grooves 19 intersect along or near the central axis 44 to form an apex 18. The apex 18 is further oriented toward the rotational direction of the rotatable runner 15 so that the diagonal grooves 19 expand outward opposite of the rotational direction. The dimensions and angular orientation of the diagonal grooves 19 and the apex 18 are design dependent and based in part on the translational range of the rotatable runner 15, the widths of the annular seal rings 3, 4 and gap 13, the extent of overlap or non-overlap between adjacent groove structures 17, the pressure required to adequately seal the interface between the rotatable runner 15 and the annular seal rings 3, 4, and/or other design factors.

Each diagonal groove 19 further includes at least two steps 62a-62d. Although four steps 62a-62d are illustrated along each diagonal groove 19 in FIG. 2, it is understood that two or more such steps 62a-62d may reside along each diagonal groove 19. Each step 62a-62d corresponds to a change in the local depth of the diagonal groove 19 relative to the outer annular surface 16. For example, if a diagonal groove 19 includes two steps 62a, 62b, then one step 62a would have a first depth and another step 62b would have a second depth. The depths differ so that one depth is deeper and another depth is shallower. In preferred arrangements, the steps 62a-62d are arranged so that the change in local depth from one step to another step results in a stepwise variation along the length of each diagonal groove 19.

When the diagonal grooves 19 intersect at an apex 18 or the like, the first step 62a may be located at the apex 18 and immediately adjacent to and communicable with the next step 62b along each diagonal groove 19 extending from the apex 18, as illustrated in FIG. 2. In other embodiments, two or more steps may reside within the apex 18 and at least one step along each diagonal groove 19. In yet other embodiments, one step 62a may reside along the apex 18 and a portion of one or more diagonal grooves 19 and the remaining step(s) 62b reside(s) exclusively along each diagonal groove 19. Regardless of the exact arrangement, the steps 62a-62d are arranged consecutively to effect a stepwise variation of the depth along the length of each groove structure 17.

In the various embodiments, the gas could originate from a combustion or mechanical source within a turbine engine. In some embodiments, the gas could be a gas heated by combustion events within an engine and communicated to the inlet(s) 9 from a compartment adjacent to the first and second compartments 5, 6. In other embodiments, the gas could be either a hot or cold gas pressurized and communicated to the outlet(s) 9 via a fan or a pump.

Referring again to FIG. 2, a gas enters the inlet(s) 9 and is directed inward across the gap 13 between the first and second annular seal rings 3, 4. After exiting the gap 13, the gas impinges the outer annular surface 16 of the rotatable runner 15, preferably at or near the apex 18 or inlet end 45. The gas enters the apex 18 or inlet end 45 and is bifurcated by the groove structure 17 so that a first portion is directed into the left-side diagonal groove 19 and a second portion is directed into the right-side diagonal groove 19. The quantity and/or rate of gas communicated onto each of the annular seal rings 3, 4 may be the same or different. The gas traverses the respective diagonal grooves 19 and is redirected outward from the rotatable runner 15 at the outlet end 46 of each diagonal groove 19. The gas exits the left-side diagonal groove 19 and impinges the first annular seal ring 3 forming a thin-film layer 20 between the first annular seal ring 3 and rotatable runner 15, thereby separating the first annular seal ring 3 from the rotatable runner 15. The gas exits the right-side diagonal groove 19 and impinges the second annular seal ring 4 forming a thin-film layer 20 between the second annular seal ring 4 and rotatable runner 15, thereby separating the second annular seal ring 4 from the rotatable runner 15.

Referring now to FIG. 3, a seal assembly 1 is shown in cross-sectional form disposed about a rotatable runner 15, the latter illustrated in side-view form, between a pair of compartments 5, 6. The rotatable runner 15 includes a plurality of groove structures 17. The groove structures 17 are arranged circumferentially along the outer annular surface 16 of the rotatable runner 15 immediately adjacent to the seal assembly 1. The groove structures 17 are positioned so as to communicate a gas onto the annular seal rings 3, 4 as the rotatable runner 15 rotates with respect to the seal assembly 1. In some embodiments, it might be advantageous for adjacent grooves structures 17 to partially overlap as represented in FIG. 3. In other embodiments, adjacent groove structures 17 could be arranged in an end-to-end configuration or with a separation between the end of one groove structure 17 and the start of the next groove structure 17.

Each groove structure 17 further includes a pair of diagonal grooves 19 disposed about a central axis 44 circumferentially along an outer annular surface 16 of the rotatable runner 15. The diagonal grooves 19 could be aligned symmetrically or non-symmetrically about the central axis 44. Each diagonal groove 19 is a channel, depression, flute, or the like disposed along the outer annular surface 16. Although the diagonal grooves 19 are represented as linear elements, it is understood that other designs are possible including multi-linear and non-linear configurations. The central axis 44 could align with the gap 13 between first and second annular seal rings 3, 4 or reside adjacent to the first and second annular seal rings 3, 4 to allow communication of a gas onto the groove structure 17 over the translational range of the rotatable runner 15. The diagonal grooves 19 are oriented so that the top of the left-side extends toward the right and the top of the right-side extends toward the left. The inward oriented ends of the diagonal grooves 19 intersect an annular groove 39 along the central axis 44. The annular groove 39 is a channel, depression, flute, or the like circumferentially along the outer annular surface 16 of the rotatable runner 15. Although the annular groove 39 is represented as linear elements, it is understood that other designs are possible including multi-linear and non-linear configurations. The intersection point between the diagonal grooves 19 and the annular groove 39 is oriented toward the rotational direction of the rotatable runner 15 so that the diagonal grooves 19 expand outward opposite of the rotational direction. The dimensions and angular orientation of the diagonal grooves 19 and annular groove 39 are design dependent and based in part on the translational range of the rotatable runner 15, the width of the annular seal rings 3, 4 and gap 13, the extent of overlap or non-overlap between adjacent groove structures 17, the pressure required to adequately seal the interface between the rotatable runner 15 and annular seal rings 3, 4, and/or other design factors.

Each diagonal groove 19 further includes at least two steps 62a-62d. Although four steps 62a-62d are illustrated along each diagonal groove 19 in FIG. 3, it is understood that two or more such steps 62a-62d may reside along each diagonal groove 19. Each step 62a-62d corresponds to a change in the local depth of the diagonal groove 19 relative to the outer annular surface 16. For example, if a diagonal groove 19 includes two steps 62a, 62b, then one step 62a would have a first depth and another step 62b would have a second depth. The depths differ so that one depth is deeper and another depth is shallower. In preferred arrangements, the steps 62a-62d are arranged so that the change in local depth from one step to another step results in a stepwise variation along the length of each diagonal groove 19.

When the diagonal grooves 19 intersect an annular groove 39 or the like, the first step 62a is immediately adjacent to and communicable with the annular groove 39 as illustrated in FIG. 3. The depth of the first step 62a may be deeper than, shallower than, or the same as the depth of the annular groove 39. Regardless of the exact arrangement, the steps 62a-62d are arranged consecutively to effect a stepwise variation of the depth along the length of each groove structure 17.

Referring again to FIG. 3, a gas enters the inlet(s) 9 and is directed inward across the gap 13 between the first and second annular seal rings 3, 4. After exiting the gap 13, the gas impinges the outer annular surface 16 of the rotatable runner 15, preferably at or near the annular groove 39. The gas enters the annular groove 39 and is bifurcated by the groove structure 17 so that a first portion is directed into the inlet end 45 of the left-side diagonal groove 19 and a second portion is directed into the inlet end 45 of the right-side diagonal groove 19. The quantity and/or rate of gas communicated onto each of the annular seal rings 3, 4 may be the same or different. The continuity of the annular groove 39 allows for uninterrupted communication of the gas into the diagonal grooves 19. The gas traverses the respective diagonal grooves 19 and is redirected outward from the rotatable runner 15 at the outlet end 46 of each diagonal groove 19. The gas exits the left-side diagonal groove 19 and impinges the first annular seal ring 3 forming a thin-film layer 20 between the first annular seal ring 3 and rotatable runner 15, thereby separating the first annular seal ring 3 from the rotatable runner 15. The gas exits the right-side diagonal groove 19 and impinges the second annular seal ring 4 forming a thin-film layer 20 between the second annular seal ring 4 and rotatable runner 15, thereby separating the second annular seal ring 4 from the rotatable runner 15.

Referring now to FIG. 4, a seal assembly 21 is shown with an annular seal housing 22, a first annular seal ring 23, a second annular seal ring 24, and a center ring 25, each disposed so as to be circumferentially arranged about a rotatable runner 35 (see FIG. 5). Components are composed of materials understood in the art. The rotatable runner 35 is an element known within the art attached to a rotatable shaft (not shown). The rotatable runner 35 is rotatable within the turbine engine via the shaft. A seal is formed along the rotatable runner 35 by each annular seal ring 23, 24. The annular seal housing 22, annular seal rings 23, 24, center ring 25, and rotatable runner 35 are aligned along and disposed about a centerline 34, often coinciding with a rotational axis along a turbine engine. The annular seal housing 22 is attached to components comprising the housing structure 51 (generally shown) of a turbine engine fixing the annular seal housing 22 thereto. The housing structure 51 is stationary and therefore non-rotating. The housing structure 51, seal assembly 21, and the rotatable runner 35 generally define at least a first compartment 5 and a second compartment 6. The configuration of the housing structure 51 is design dependent; however, it is understood for purposes of the present invention that the housing structure 51 cooperates with the seal assembly 1 and rotatable runner 35 to define two separate compartments whereby a gas resides at a low pressure within one such compartment 5 and a lubricant resides at low pressure within another compartment 6.

The annular seal housing 22 generally defines a pocket within which the annular seal rings 23, 24 and center ring 25 reside. The annular seal housing 22 could have a U-shaped cross-section opening inward toward the centerline 34. One end of the annular seal housing 22 could include an insert 27 and a retaining ring 28 which allow for assembly/disassembly of the annular seal rings 23, 24 and center ring 25 onto the annular seal housing 22. The annular seal rings 23, 24 could be fixed to the annular seal housing 22 via means known within the art to limit or to prevent relative rotational motion between the annular seal rings 23, 24 and the annular seal housing 22. In one non-limiting example, a pair of anti-rotation pins 52 is secured to the annular seal housing 22 to separately engage a pocket 53 along each of the first and second annular seal rings 23, 24. Interaction between anti-rotation pin 52 and pocket 53 functions as a positive stop to restrict rotation of each of the first and second annular seal rings 23, 24 with respect to the annular seal housing 22.

The first and second annular seal rings 23, 24 are ring-shaped elements. Each annular seal ring 23, 24 could comprise at least two arcuate segments which form a generally circular-shaped ring when assembled about a rotatable runner 35. The segmented construction of the first and second annular seal rings 3, 4 allows for radial expansion and contraction by the respective annular seal rings 23, 24 about a rotatable runner 35. Each annular seal ring 23, 24, is generally biased toward a rotatable runner 35 via a compressive force applied by a garter spring 29, 30. The garter spring 29, 30 could contact the outer circumference of the respective annular seal ring 23, 24 and apply the compressive force inward toward the rotatable runner 35.

The center ring 25 is interposed between the first and second annular seal rings 23, 24 within the annular seal housing 22. A plurality of first springs 32 are interposed between the first annular seal ring 23 and the center ring 25. A plurality of second springs 33 are interposed between the second annular seal ring 24 and the center ring 25. The first and second springs 32, 33 could be evenly spaced about the circumference of the respective annular seal rings 23, 24 so as to exert a generally uniform separation force onto each annular seal ring 23, 24 with respect to the center ring 25. The first and second springs 32, 33 could be a coil-type device which generally resists compression. Each spring 32, 33 could be attached or fixed to the respective annular seal ring 23, 24. For example, one end of each first and second spring 32, 33 could be partially recessed within a pocket 54 along the respective annular seal ring 23, 24. First and second springs 32, 33 should be sufficiently long so as to at least partially compress when assembled between the respective annular seal rings 23, 24 and center ring 25. First and second springs 32, 33 should exert a force onto the annular seal rings 23, 24 causing the annular seal rings 23, 24 to separate from the center ring 25, thereby pressing the annular seal rings 23, 24 onto opposite sides of the annular seal housing 22 with the center ring 25 substantially centered between the annular seal rings 23, 24. The separation force exerted by the compression springs 32, 33 could form an optional gap (not shown) between the center ring 25 and each annular seal ring 23, 24.

At least one inlet 26 is disposed along an outer wall of the annular seal housing 22. The inlet(s) 26 is/are positioned so as to at least partially overlay the center ring 25 between the annular seal rings 23, 24. Two or more inlets 26 could be uniformly positioned about the circumference of the annular seal housing 22. Each inlet 26 is a pathway through which a gas is communicated between the annular seal rings 23, 24.

In some embodiments, the center ring 25 could include a plurality of holes 31 traversing the radial dimension of the center ring 25. The holes 31 could be evenly spaced about the circumference of the center ring 25 and positioned so as to at least partially overlay the inlet(s) 26.

Although various embodiments are described including a center ring 25, it is understood that the center ring 25 is an optional feature and that such embodiments could include the gap 13 arrangement shown in FIG. 1.

Referring now to FIG. 5, a seal assembly 21 is shown in cross-sectional form disposed about a rotatable runner 35, the latter illustrated in side-view form, between a pair of compartments 5, 6. The rotatable runner 35 includes a plurality of groove structures 37. The groove structures 37 are arranged circumferentially along the outer annular surface 36 of the rotatable runner 35 immediately adjacent to the seal assembly 21. The groove structures 37 are positioned so as to communicate a gas onto the annular seal rings 23, 24 as the rotatable runner 35 rotates with respect to the seal assembly 21. In some embodiments, it might be advantageous for adjacent grooves structures 37 to partially overlap as represented in FIG. 5. In other embodiments, adjacent groove structures 37 could be arranged in an end-to-end configuration or with a separation between the end of one groove structure 37 and the start of the next groove structure 37.

Each groove structure 37 further includes a pair of diagonal grooves 38 disposed about a central axis 44 circumferentially along an outer annular surface 36 of the rotatable runner 35. The diagonal grooves 38 could be aligned symmetrically or non-symmetrically about the central axis 44. Each diagonal groove 38 is a channel, depression, flute, or the like disposed along the outer annular surface 36. Although the diagonal grooves 38 are represented as linear elements, it is understood that other designs are possible including multi-linear and non-linear configurations. The central axis 44 could align with the center ring 25 between first and second annular seal rings 23, 24 or reside adjacent to the first and second annular seal rings 23, 24 to allow communication of a gas onto the groove structures 37 over the translational range of the rotatable runner 35. The diagonal grooves 38 are oriented so that the top of the left-side diagonal groove 38 extends toward the right and the top of the right-side diagonal groove 38 extends toward the left. The inward oriented ends of the diagonal grooves 38 intersect along or near the central axis 44 to form an apex 40. The apex 40 is further oriented toward the rotational direction of the rotatable runner 35 so that the diagonal grooves 38 expand outward opposite of the rotational direction. The dimensions and angular orientation of the diagonal grooves 38 and the apex 40 are design dependent and based in part on the translational range of the rotatable runner 35, the widths of the annular seal rings 23, 24, center ring 25 and optional hole 31, the extent of overlap or non-overlap between adjacent groove structures 37, the pressure required to adequately seal the interface between the rotatable runner 35 and annular seal rings 23, 24, and/or other design factors.

Each diagonal groove 38 further includes at least two steps 62a-62d. Although four steps 62a-62d are illustrated along each diagonal groove 38 in FIG. 5, it is understood that two or more such steps 62a-62d may reside along each diagonal groove 38. Each step 62a-62d corresponds to a change in the local depth of the diagonal groove 38 relative to the outer annular surface 36. For example, if a diagonal groove 38 includes two steps 62a, 62b, then one step 62a would have a first depth and another step 62b would have a second depth. The depths differ so that one depth is deeper and another depth is shallower. In preferred arrangements, the steps 62a-62d are arranged so that the change in local depth from one step to another step results in a stepwise variation along the length of each diagonal groove 38.

When the diagonal grooves 38 intersect at an apex 40 or the like, the first step 62a may be located at the apex 40 and immediately adjacent to and communicable with the next step 62b along each diagonal groove 38 extending from the apex 40, as illustrated in FIG. 5. In other embodiments, two or more steps may reside within the apex 40 and at least one step along each diagonal groove 38. In yet other embodiments, one step 62a may reside along the apex 40 and a portion of one or more diagonal grooves 38 and the remaining step(s) 62b reside(s) exclusively along each diagonal groove 38. Regardless of the exact arrangement, the steps 62a-62d are arranged consecutively to effect a stepwise variation of the depth along the length of each groove structure 3 7.

Referring again to FIG. 5, a gas enters the inlet(s) 26 and is directed inward onto the center ring 25. The gas flows around the center ring 25 traversing the gaps between the center ring 25 and the first and second annular seal rings 23, 24 when the center ring 25 does not include the optional holes 31. The gas traverses the holes 31 when the center ring 25 includes the optional holes 31. Next, the gas impinges the outer annular surface 36 of the rotatable runner 35, preferably at or near the apex 40 or inlet end 45. The gas enters the apex 40 or inlet end 45 and is bifurcated by the groove structure 37 so that a first portion is directed into the left-side diagonal groove 38 and a second portion is directed into the right-side diagonal groove 38. The quantity and/or rate of gas communicated onto each of the annular seal rings 23, 24 may be the same or different. The gas traverses the respective diagonal grooves 38 and is redirected outward from the rotatable runner 35 at the outlet end 46 of each diagonal groove 38. The gas exits the left-side diagonal groove 38 and impinges the first annular seal ring 23 forming a thin-film layer 20 between the first annular seal ring 23 and rotatable runner 35, thereby separating the first annular seal ring 23 from the rotatable runner 35. The gas exits the right-side diagonal groove 38 and impinges the second annular seal ring 24 forming a thin-film layer 20 between the second annular seal ring 24 and rotatable runner 35, thereby separating the second annular seal ring 24 from the rotatable runner 35.

Referring now to FIG. 6, a seal assembly 21 is shown in cross-sectional form disposed about a rotatable runner 35, the latter illustrated in side-view form, between a pair of compartments 5, 6. The rotatable runner 35 includes a plurality of groove structures 37. The groove structures 37 are arranged circumferentially along the outer annular surface 36 of the rotatable runner 35 immediately adjacent to the seal assembly 21. The groove structures 37 are positioned so as to communicate a gas onto the annular seal rings 23, 24 as the rotatable runner 35 rotates with respect to the seal assembly 21. In some embodiments, it might be advantageous for adjacent grooves structures 37 to partially overlap as represented in FIG. 6. In other embodiments, adjacent groove structures 37 could be arranged in an end-to-end configuration or with a separation between the end of one groove structure 37 and the start of the next groove structure 37.

Each groove structure 37 further includes a pair of diagonal grooves 38 disposed about a central axis 44 circumferentially along an outer annular surface 36 of the rotatable runner 35. The diagonal grooves 38 could be aligned symmetrically or non-symmetrically about the central axis 44. Each diagonal groove 38 is a channel, depression, flute, or the like disposed along the outer annular surface 36. Although the diagonal grooves 38 are represented as linear elements, it is understood that other designs are possible including multi-linear and non-linear configurations. The central axis 44 could align with the center ring 25 between first and second annular seal rings 23, 24 or reside adjacent to the first and second annular seal rings 23, 24 to allow communication of a gas onto the groove structures 37 over the translational range of the rotatable runner 35. The diagonal grooves 38 are oriented so that the top of the left-side diagonal groove 38 extends toward the right and the top of the right-side diagonal groove 38 extends toward the left. The inward oriented ends of the diagonal grooves 38 are separately disposed about the central axis 44 so that the diagonal grooves 38 expand outward opposite of the rotational direction. The dimensions and angular orientation of the diagonal grooves 38 are design dependent and based in part on the translational range of the rotatable runner 35, the widths of the annular seal rings 23, 24, center ring 25 and optional hole 31, the extent of overlap or non-overlap between adjacent groove structures 37, the pressure required to adequately seal the interface between the rotatable runner 35 and annular seal rings 23, 24, and/or other design factors.

Each diagonal groove 38 further includes at least two steps 62a-62d. Although four steps 62a-62d are illustrated along each diagonal groove 38 in FIG. 6, it is understood that two or more such steps 62a-62d may reside along each diagonal groove 38. Each step 62a-62d corresponds to a change in the local depth of the diagonal groove 38 relative to the outer annular surface 36. For example, if a diagonal groove 38 includes two steps 62a, 62b, then one step 62a would have a first depth and another step 62b would have a second depth. The depths differ so that one depth is deeper and another depth is shallower. In preferred arrangements, the steps 62a-62d are arranged so that the change in local depth from one step to another step results in a stepwise variation along the length of each diagonal groove 38. Regardless of the exact arrangement, the steps 62a-62d are arranged consecutively to effect a stepwise variation of the depth along the length of each groove structure 37.

Referring again to FIG. 6, a gas enters the inlet(s) 26 and is directed inward onto the center ring 25. The gas flows around the center ring 25 traversing the gaps between the center ring 25 and the first and second annular seal rings 23, 24 when the center ring 25 does not include the optional holes 31. The gas traverses the holes 31 when the center ring 25 includes the optional holes 31. Next, the gas impinges the outer annular surface 36 of the rotatable runner 35, preferably at or near inlet ends 45. The gas is bifurcated by the groove structure 37 at the inlet ends 45 so that a first portion is directed into the left-side diagonal groove 38 and a second portion is directed into the right-side diagonal groove 38. The quantity and/or rate of gas communicated onto each of the annular seal rings 23, 24 may be the same or different. The gas traverses the respective diagonal grooves 38 and is redirected outward from the rotatable runner 35 at the outlet end 46 of each diagonal groove 38. The gas exits the left-side diagonal groove 38 and impinges the first annular seal ring 23 forming a thin-film layer 20 between the first annular seal ring 23 and rotatable runner 35, thereby separating the first annular seal ring 23 from the rotatable runner 35. The gas exits the right-side diagonal groove 38 and impinges the second annular seal ring 24 forming a thin-film layer 20 between the second annular seal ring 24 and rotatable runner 35, thereby separating the second annular seal ring 24 from the rotatable runner 35.

Referring now to FIG. 7, a seal assembly 21 is shown in cross-sectional form disposed about a rotatable runner 35, the latter illustrated in side-view form, between a pair of compartments 5, 6. The rotatable runner 35 includes a plurality of groove structures 41. The groove structures 41 are arranged circumferentially along the outer annular surface 36 of the rotatable runner 35 immediately adjacent to the seal assembly 21. The groove structures 41 are positioned so as to communicate a gas onto the annular seal rings 23, 24 as the rotatable runner 35 rotates with respect to the seal assembly 21. In some embodiments, it might be advantageous for adjacent grooves structures 41 to partially overlap. In other embodiments, adjacent groove structures 41 could be arranged in an end-to-end configuration or with a separation between the end of one groove structure 41 and the start of the next groove structure 41, the latter represented in FIG. 7.

Each groove structure 41 further includes a plurality of diagonal grooves 43 disposed about a central axis 44 circumferentially along an outer annular surface 36 of the rotatable runner 35. The diagonal grooves 43 could be aligned symmetrically or non-symmetrically about the central axis 44. Each diagonal groove 43 is a channel, depression, flute, or the like disposed along the outer annular surface 36. Although the diagonal grooves 43 are represented as linear elements, it is understood that other designs are possible including multi-linear and non-linear configurations. The central axis 44 could align with the center ring 25 between first and second annular seal rings 23, 24 or reside adjacent to the first and second annular seal rings 23, 24 to allow communication of a gas onto the groove structures 41 over the translational range of the rotatable runner 35. The diagonal grooves 43 are oriented so that the top of each left-side diagonal groove 43 extends toward the right and the top of each right-side diagonal groove 43 extends toward the left. The inward oriented ends of the diagonal grooves 43 are separately disposed about the central axis 44 so that the diagonal grooves 43 expand outward opposite of the rotational direction.

At least two diagonal grooves 43 are disposed along each side of the central axis 44. In some embodiments, the diagonal grooves 43 could be substantially parallel to other diagonal grooves 43 along the same side of the central axis 44 as represented by the set of three diagonal grooves 43 along each side of the central axis 44 in FIG. 7. In other embodiments, the diagonal grooves 43 could be oriented at two or more angles with respect to the rotational direction and/or central axis 44 whereby the diagonal grooves 43 along the same side of the central axis 44 are non-parallel. It is also possible in some embodiments for the inlet ends 45 and the outlet ends 46 to be aligned circumferentially as represented in FIG. 7. In yet other embodiments, the inlet ends 45 and the outlet ends 46 could be skewed or staggered and/or the diagonal grooves 43 have the same or different lengths.

The dimensions, angular orientation and number of the diagonal grooves 43 are design dependent and based in part on the translational range of the rotatable runner 35, the widths of the annular seal rings 23, 24, center ring 25 and optional hole 31, the extent of overlap or non-overlap between adjacent groove structures 41, the number of flows from a groove structure 41 required to impinge each annular seal ring 23, 24, the pressure required to adequately seal the interface between the rotatable runner 35 and annular seal rings 23, 24, and/or other design factors.

Each diagonal groove 43 further includes at least two steps 62a-62d. Although four steps 62a-62d are illustrated along each diagonal groove 43 in FIG. 7, it is understood that two or more such steps 62a-62d may reside along each diagonal groove 43. Each step 62a-62d corresponds to a change in the local depth of the diagonal groove 43 relative to the outer annular surface 36. For example, if a diagonal groove 43 includes two steps 62a, 62b, then one step 62a would have a first depth and another step 62b would have a second depth. The depths differ so that one depth is deeper and another depth is shallower. In preferred arrangements, the steps 62a-62d are arranged so that the change in local depth from one step to another step results in a stepwise variation along the length of each diagonal groove 43. Regardless of the exact arrangement, the steps 62a-62d are arranged consecutively to effect a stepwise variation of the depth along the length of each groove structure 41.

Referring again to FIG. 7, a gas enters the inlet(s) 26 and is directed inward onto the center ring 25. The gas flows around the center ring 25 traversing the gaps between the center ring 25 and the first and second annular seal rings 23, 24 when the center ring 25 does not include the optional holes 31. The gas traverses the holes 31 when the center ring 25 includes the optional holes 31. Next, the gas impinges the outer annular surface 36 of the rotatable runner 35, preferably at or near inlet ends 45. The gas is bifurcated by the groove structure 41 at the inlet ends 45 so that a first portion is directed into the left-side diagonal grooves 43 and a second portion is directed into the right-side diagonal grooves 43. The quantity and/or rate of gas communicated onto each of the annular seal rings 23, 24 may be the same or different. The gas traverses the respective diagonal grooves 43 and is redirected outward from the rotatable runner 35 at the outlet end 46 of each diagonal groove 43. The gas exits at least one left-side diagonal groove 43 within a groove structure 41 and impinges the first annular seal ring 23 forming a thin-film layer 20 between the first annular seal ring 23 and rotatable runner 35, thereby separating the first annular seal ring 23 from the rotatable runner 35. The gas exits at least one right-side diagonal groove 43 within a groove structure 41 and impinges the second annular seal ring 24 forming a thin-film layer 20 between the second annular seal ring 24 and rotatable runner 35, thereby separating the second annular seal ring 24 from the rotatable runner 35.

Referring now to FIG. 8, a seal assembly 21 is shown in cross-sectional form disposed about a rotatable runner 35, the latter illustrated in side-view form, between a pair of compartments 5, 6. The rotatable runner 35 includes a plurality of groove structures 41. The groove structures 41 are arranged circumferentially along the outer annular surface 36 of the rotatable runner 35 immediately adjacent to the seal assembly 21. The groove structures 41 are positioned so as to communicate a gas onto the annular seal rings 23, 24 as the rotatable runner 35 rotates with respect to the seal assembly 21. In some embodiments, it might be advantageous for adjacent grooves structures 41 to partially overlap. In other embodiments, adjacent groove structures 41 could be arranged in an end-to-end configuration or with a separation between the end of one groove structure 41 and the start of the next groove structure 41, the latter represented in FIG. 8.

Each groove structure 41 further includes at least two of diagonal grooves 43 disposed about a central axis 44 circumferentially along an outer annular surface 36 of the rotatable runner 35. The diagonal grooves 43 could be aligned symmetrically or non-symmetrically about the central axis 44. Each diagonal groove 43 is a channel, depression, flute, or the like disposed along the outer annular surface 36. Although the diagonal grooves 43 are represented as linear elements, it is understood that other designs are possible including multi-linear and non-linear configurations. The central axis 44 could align with the center ring 25 between first and second annular seal rings 23, 24 or reside adjacent to the first and second annular seal rings 23, 24 to allow communication of a gas onto the groove structures 41 over the translational range of the rotatable runner 35. The diagonal grooves 43 are oriented so that the top of each left-side diagonal groove 43 extends toward the right and the top of each right-side diagonal groove 43 extends toward the left. The inward oriented ends of the diagonal grooves 43 are separately disposed about the central axis 44 so that the diagonal grooves 43 expand outward opposite of the rotational direction.

At least one diagonal groove 43 is disposed along each side of the central axis 44. When two or more diagonal grooves 43 are disposed along each side of the central axis 44, the diagonal grooves 43 could be substantially parallel to other diagonal grooves 43 along the same side of the central axis 44 as represented by the set of three diagonal grooves 43 along each side of the central axis 44 in FIG. 8. In other embodiments, the diagonal grooves 43 could be oriented at two or more angles with respect to the rotational direction and/or central axis 44 whereby the diagonal grooves 43 along the same side of the central axis 44 are non-parallel. Two or more of the inlet ends 45 and the outlet ends 46 could be aligned circumferentially as represented in FIG. 8. Two or more of other inlet ends 45 and outlet ends 46 could be skewed or staggered as also represented in FIG. 8. Two or more diagonal grooves 43 could have the same or different lengths as further represented in FIG. 8.

Two or more diagonal grooves 43 could communicate with a feed groove 42 at the inlet ends 45 of the diagonal grooves 43. The feed groove 42 is a channel, depression, flute, or the like disposed along the outer annular surface 36. Although the feed groove 42 is represented as a linear element, it is understood that other designs are possible including multi-linear and non-linear configurations. The feed groove 42 is generally oriented to traverse the central axis 44 so as to communication with diagonal grooves 43 along both sides of the groove structure 41. The feed groove 42 could be substantially perpendicular to the rotational direction of the rotatable runner 35 and/or the central axis 44 as represented in FIG. 8. In other embodiments the feed groove 42 could be obliquely oriented with respect to the rotational direction and/or central axis 44. When less than all diagonal grooves 43 communicate with a feed groove 42 it is possible for the diagonal grooves 43 to intersect as described in FIGS. 2 and 5 to form a secondary groove structure 55 within the larger primary groove structure 41, as represented in FIG. 8.

The dimensions, angular orientation and number of the diagonal grooves 43 and feed groove 42 are design dependent and based in part on the translational range of the rotatable runner 35, the widths of the annular seal rings 23, 24, center ring 25 and optional hole 31, the extent of overlap or non-overlap between adjacent groove structures 41 with or without secondary groove structures 55, the number of flows from a groove structure 41 required to impinge each annular seal ring 23, 24, the pressure required to adequately seal the interface between the rotatable runner 35 and annular seal rings 23, 24, and/or other design factors.

Each diagonal groove 43 further includes at least two steps 62a-62d. Although three or four steps 62a-62d are illustrated along the diagonal grooves 43 in FIG. 8, it is understood that two or more such steps 62a-62d may reside along each diagonal groove 43. Each step 62a-62d corresponds to a change in the local depth of the diagonal groove 43 relative to the outer annular surface 36. For example, if a diagonal groove 43 includes two steps 62a, 62b, then one step 62a would have a first depth and another step 62b would have a second depth. The depths differ so that one depth is deeper and another depth is shallower. In preferred arrangements, the steps 62a-62d are arranged so that the change in local depth from one step to another step results in a stepwise variation along the length of each diagonal groove 43.

When the diagonal grooves 43 intersect at an apex as otherwise described herein or a feed groove 40, the first step 62a may be located at the apex or the feed groove 40 and immediately adjacent to and communicable with the next step 62b along each diagonal groove 43, as illustrated in FIG. 8. In other embodiments, two or more steps may reside within the apex or the feed groove 40 and at least one step along each diagonal groove 43. In yet other embodiments, one step 62a may reside along the apex or the feed groove 40 and a portion of one or more diagonal grooves 43 and the remaining step(s) 62b reside(s) exclusively along each diagonal groove 43, as also illustrated in FIG. 8. Regardless of the exact arrangement, the steps 62a-62d are arranged consecutively to effect a stepwise variation of the depth along the length of each groove structure 41 and each secondary groove structure 55.

Referring again to FIG. 8, a gas enters the inlet(s) 26 and is directed inward onto the center ring 25. The gas flows around the center ring 25 traversing the gaps between the center ring 25 and the first and second annular seal rings 23, 24 when the center ring 25 does not include the optional holes 31. The gas traverses the holes 31 when the center ring 25 includes the optional holes 31. Next, the gas impinges the feed groove 42 along the outer annular surface 36 of the rotatable runner 35. The gas is bifurcated along the feed groove 42 allowing the gas to enter the inlet ends 45 so that a first portion is directed into the left-side diagonal grooves 43 and a second portion is directed into the right-side diagonal grooves 43. The quantity and/or rate of gas communicated onto each of the annular seal rings 23, 24 may be the same or different. The gas traverses the respective diagonal grooves 43 and is redirected outward from the rotatable runner 35 at the outlet end 46 of each diagonal groove 43. The gas exits at least one left-side diagonal groove 43 within a groove structure 41 and impinges the first annular seal ring 23 forming a thin-film layer 20 between the first annular seal ring 23 and rotatable runner 35, thereby separating the first annular seal ring 23 from the rotatable runner 35. The gas exits at least one right-side diagonal groove 43 within a groove structure 41 and impinges the second annular seal ring 24 forming a thin-film layer 20 between the second annular seal ring 24 and rotatable runner 35, thereby separating the second annular seal ring 24 from the rotatable runner 35. The flow characteristics of the secondary groove structure 55 are as described for FIGS. 2 and 5.

Referring now to FIG. 9, a seal assembly 21 is shown in cross-sectional form disposed about a rotatable runner 35, the latter illustrated in side-view form, between a pair of compartments 5, 6. The rotatable runner 35 includes a plurality of groove structures 41. The groove structures 41 are arranged circumferentially along the outer annular surface 36 of the rotatable runner 35 immediately adjacent to the seal assembly 21. The groove structures 41 are positioned so as to communicate a gas onto the annular seal rings 23, 24 as the rotatable runner 35 rotates with respect to the seal assembly 21. In some embodiments, it might be advantageous for adjacent grooves structures 41 to partially overlap. In other embodiments, adjacent groove structures 41 could be arranged in an end-to-end configuration or with a separation between the end of one groove structure 41 and the start of the next groove structure 41, the latter represented in FIG. 9.

Each groove structure 41 further includes at least two diagonal grooves 43 disposed about a central axis 44 circumferentially along an outer annular surface 36 of the rotatable runner 35. The diagonal grooves 43 could be aligned symmetrically or non-symmetrically about the central axis 44. Each diagonal groove 43 is a channel, depression, flute, or the like disposed along the outer annular surface 36. Although the diagonal grooves 43 are represented as linear elements, it is understood that other designs are possible including multi-linear and non-linear configurations. The central axis 44 could align with the center ring 25 between first and second annular seal rings 23, 24 or reside adjacent to the first and second annular seal rings 23, 24 to allow communication of a gas onto the groove structures 41 over the translational range of the rotatable runner 35. The diagonal grooves 43 are oriented so that the top of each left-side diagonal groove 43 extends toward the right and the top of each right-side diagonal groove 43 extends toward the left. The inward oriented ends of the diagonal grooves 43 are separately disposed about the central axis 44 so that the diagonal grooves 43 expand outward opposite of the rotational direction.

At least two diagonal grooves 43 are disposed along each side of the central axis 44. The diagonal grooves 43 could be substantially parallel to other diagonal grooves 43 along the same side of the central axis 44 as represented by the set of three diagonal grooves 43 along each side of the central axis 44 in FIG. 9. In other embodiments, the diagonal grooves 43 could be oriented at two or more angles with respect to the rotational direction and/or central axis 44 whereby the diagonal grooves 43 along the same side of the central axis 44 are non-parallel. Two or more of the inlet ends 45 and the outlet ends 46 could be aligned circumferentially as represented in FIG. 9. Two or more inlet ends 45 and outlet ends 46 could be skewed or staggered. Two or more diagonal groove 43 could have the same or different lengths.

Two or more diagonal grooves 43 could communicate with a first feed groove 56 at the inlet ends 45 of the left-side diagonal grooves 43. Two or more other diagonal grooves 43 could communicate with a second feed groove 57 at the inlet ends 45 of the right-side diagonal grooves 43. Each first and second feed groove 56, 57 is a channel, depression, flute, or the like disposed along the outer annular surface 36. Although the feed grooves 56, 57 are represented as linear elements, it is understood that other designs are possible including multi-linear and non-linear configurations. The feed grooves 56, 57 are separately oriented to either side of the central axis 44. The feed grooves 56, 57 could be substantially perpendicular or oblique to the rotational direction and/or central axis 44, the former represented in FIG. 9.

The dimensions, angular orientation and number of the diagonal grooves 43 and feed grooves 56, 57 are design dependent and based in part on the translational range of the rotatable runner 35, the widths of the annular seal rings 23, 24, center ring 25 and optional hole 31, the extent of overlap or non-overlap between adjacent groove structures 41, the number of flows from a groove structure 41 required to impinge each annular seal ring 23, 24, the pressure required to adequately seal the interface between the rotatable runner 35 and annular seal rings 23, 24, and/or other design factors.

Each diagonal groove 43 further includes at least two steps 62a-62d. Although four steps 62a-62d are illustrated along the diagonal grooves 43 in FIG. 9, it is understood that two or more such steps 62a-62d may reside along each diagonal groove 43. Each step 62a-62d corresponds to a change in the local depth of the diagonal groove 43 relative to the outer annular surface 36. For example, if a diagonal groove 43 includes two steps 62a, 62b, then one step 62a would have a first depth and another step 62b would have a second depth. The depths differ so that one depth is deeper and another depth is shallower. In preferred arrangements, the steps 62a-62d are arranged so that the change in local depth from one step to another step results in a stepwise variation along the length of each diagonal groove 43.

When the diagonal grooves 43 intersect a first feed groove 56 or a second feed groove 57, the first step 62a may be located at the first feed groove 56 or the second feed groove 57 and immediately adjacent to and communicable with the next step 62b along each diagonal groove 43. In other embodiments, two or more steps may reside within the first feed groove 56 or the second feed groove 57and at least one step along each diagonal groove 43. In yet other embodiments, one step 62a may reside along the first feed groove 56 or the second feed groove 57 and a portion of one or more diagonal grooves 43 and the remaining step(s) 62b reside(s) exclusively along each diagonal groove 43, as illustrated in FIG. 9. Regardless of the exact arrangement, the steps 62a-62d are arranged consecutively to effect a stepwise variation of the depth along the length of each groove structure 41.

Referring again to FIG. 9, a gas enters the inlet(s) 26 and is directed inward onto the center ring 25. The gas flows around the center ring 25 traversing the gaps between the center ring 25 and the first and second annular seal rings 23, 24 when the center ring 25 does not include the optional holes 31. The gas traverses the holes 31 when the center ring 25 includes the optional holes 31. Next, the gas impinges along or near the feed grooves 56, 57 along outer annular surface 36 of the rotatable runner 35. The gas is bifurcated by the groove structure 41 so as to separately enter the first and second feed grooves 56, 57 so that a first portion is directed into the inlet ends 45 of the left-side diagonal grooves 43 and a second portion is directed into the inlet ends 45 of the right-side diagonal grooves 43. The quantity and/or rate of gas communicated onto each of the annular seal rings 23, 24 may be the same or different. The gas traverses the respective diagonal grooves 43 and is redirected outward from the rotatable runner 35 at the outlet end 46 of each diagonal groove 43. The exits at least one left-side diagonal groove 43 within a groove structure 41 and impinges the first annular seal ring 23 forming a thin-film layer 20 between the first annular seal ring 23 and rotatable runner 35, thereby separating the first annular seal ring 23 from the rotatable runner 35. The gas exits at least one right-side diagonal groove 43 within a groove structure 41 and impinges the second annular seal ring 24 forming a thin-film layer 20 between the second annular seal ring 24 and rotatable runner 35, thereby separating the second annular seal ring 24 from the rotatable runner 35.

Referring now to FIGS. 10-13, several seal assemblies 1 are shown in cross-sectional form disposed about a rotatable runner 15, the latter illustrated in side-view form, between a pair of compartments 5, 6. The rotatable runner 15 includes a plurality of groove structures 41. The groove structures 41 are arranged circumferentially along the outer annular surface 16 of the rotatable runner 15 immediately adjacent to the seal assembly 1. The groove structures 41 are positioned so as to communicate a gas onto the annular seal rings 3, 4 as the rotatable runner 15 rotates with respect to the seal assembly 1. In some embodiments, it might be advantageous for adjacent grooves structures 41 to partially overlap. In other embodiments, adjacent groove structures 41 could be arranged in an end-to-end configuration or with a separation between the end of one groove structure 41 and the start of the next groove structure 41, the latter represented in FIGS. 10-13.

Each groove structure 41 further includes at least two axial grooves 49 disposed about a central axis 44 circumferentially along an outer annular surface 16 of the rotatable runner 15. The axial grooves 49 could be aligned symmetrically or non-symmetrically about the central axis 44. Each axial groove 49 is a channel, depression, flute, or the like disposed along the outer annular surface 16. Although the axial grooves 49 are represented as linear elements, it is understood that other designs are possible including multi-linear and non-linear configurations. The central axis 44 could align with the gap 13 between the first and second annular seal rings 3, 4 or reside adjacent to the first and second annular seal rings 3, 4 to allow communication of a gas onto the groove structures 41 over the translational range of the rotatable runner 15. The axial grooves 49 are oriented substantially parallel to the rotational direction of the rotatable runner 15 and/or the central axis 44.

At least two axial grooves 49 are disposed along each side of the central axis 44. The axial grooves 49 could be substantially parallel to other axial grooves 49 along the same side of the central axis 44 as represented by the set of two or more axial grooves 49 along each side of the central axis 44 in FIGS. 10-13. Two or more of the inlet ends 45 and the outlet ends 46 could be aligned circumferentially as represented in FIGS. 10-13. It is also possible for the inlet ends 45 and the outlet ends 46 to be skewed or staggered and/or and the axial grooves 49 to have the same or different lengths.

The axial grooves 49 communicate with a feed groove 42 at the inlet ends 45 of the axial grooves 49. The feed groove 42 is a channel, depression, flute, or the like disposed along the outer annular surface 16. Although the feed groove 42 is represented as a linear element, it is understood that other designs are possible including multi-linear and non-linear configurations. The feed groove 42 traverses the central axis 44. The feed groove 42 could be substantially perpendicular or oblique to the rotational direction and/or central axis 44.

The dimensions, angular orientation and number of the axial grooves 49 are design dependent and based in part on the translational range of the rotatable runner 15, the widths of the annular seal rings 3, 4, the extent of overlap or non-overlap between adjacent groove structures 41, the number of flows from a groove structure 41 required to impinge each annular seal ring 3, 4, the pressure required to adequately seal the interface between the rotatable runner 15 and annular seal rings 3, 4, and/or other design factors.

An optional windback thread 47 could extend from the annular seal housing 2 in the direction of the second compartment 6. The windback thread 47 is an element known within the art that utilizes the shear forces produced by a rotating shaft to circumferentially wind a fluid along one or more threads. The threads are disposed along the inner annular surface of the windback thread 47 and oriented so that a fluid enters the threads and is directed away from the annular seal rings 3, 4 within a seal assembly 1. The windback thread 47 could be machined into the annular seal housing 2 or mechanically attached or fastened thereto as a separate element via methods understood in the art. The windback thread 47 is disposed about the runner 15 so as to overlay the runner 15 without contact. A plurality of optional slots 48 are positioned along one end of the rotatable runner 15 adjacent to the windback thread 47. The slots 48 could interact with the windback thread 47 to sling a fluid away from the annular seal rings 3, 4 in the direction of the second compartment 6. Although shown with several embodiments, it is understood that an optional windback thread 47 is applicable to other embodiments described herein.

In some embodiments, it might be advantageous to taper the axial grooves 49 as represent in FIG. 11. The axial groove 49 could include a width at the inlet end 45 that is greater than the width at the outlet end 46 so that the width decreases with distance along the axial groove 49. This arrangement progressively reduces the volume through which the gas passes causing a gas to compress with distance along the axial groove 49, thereby further increasing the pressure otherwise achieved along an axial groove 49 with uniform width. This effect is also possible by tapering the axial groove 49 depthwise along the length of the axial groove 49 so that the depth at the inlet end 45 is greater than the depth at the outlet end 46.

In yet other embodiments, the groove structures 41 could vary widthwise as represented in FIGS. 12 and 13. The width between adjacent groove structures 41 could differ so that the axial width $W_1$ of one groove structure 41 is greater than the axial width $W_2$ of the next groove structure 41 resulting in an overhang 50. The overhang 50 facilitates a staggered arrangement of axial grooves 49 between adjacent groove structures 41 when the total number of axial grooves 49 is the same in each groove structure 41 as represented in FIG. 12 and when the total numbers of axial grooves 49 differ between groove structures 41 as represented in FIG. 13. Both embodiments increase sealing effects over a greater range of translations by a rotatable runner 15.

Each axial groove 49 further includes at least two steps 62a-62d. Although four steps 62a-62d are illustrated along the axial grooves 49 in FIGS. 10-13, it is understood that two or more such steps 62a-62d may reside along each axial groove 49. Each step 62a-62d corresponds to a change in the local depth of the axial groove 49 relative to the outer annular surface 16. For example, if an axial groove 49 includes two steps 62a, 62b, then one step 62a would have a first depth and another step 62b would have a second depth. The depths differ so that one depth is deeper and another depth is shallower. In preferred arrangements, the steps 62a-62d are arranged so that the change in local depth from one step to another step results in a stepwise variation along the length of each axial groove 49.

When the axial grooves 49 intersect a feed groove 42, the first step 62a may be located at the feed groove 42 and immediately adjacent to and communicable with the next step 62b along each axial groove 49. In other embodiments, two or more steps may reside within the feed groove 42 and at least one step along each axial groove 49. In yet other embodiments, one step 62a may reside along the feed groove 42 and a portion of one or more axial grooves 49 and the remaining step(s) 62b reside(s) exclusively along each axial groove 49, as illustrated in FIGS. 10-13. Regardless of the exact arrangement, the steps 62a-62d are arranged consecutively to effect a stepwise variation of the depth along the length of each groove structure 41.

Referring again to FIGS. 10-13, a gas enters the inlet(s) 9 and is directed into the gap 13 between the annular seal rings 3, 4. The gas traverses the gap 13 thereafter impinging the feed groove 42 along outer annular surface 16 of the rotatable runner 15. The gas is bifurcated along the feed groove 42 allowing the gas to enter the inlet ends 45 so that a first portion is directed into the left-side axial grooves 49 and a second portion is directed into the right-side axial grooves 49. The quantity and/or rate of gas communicated onto each of the annular seal rings 3, 4 may be the same or different. The gas traverses the respective axial grooves 49 and is redirected outward from the rotatable runner 15 at the outlet end 46 of each axial groove 49. The gas exits at least one left-side axial groove 49 within a groove structure 41 and impinges the first annular seal ring 3 forming a thin-film layer 20 between the first annular seal ring 3 and rotatable runner 15, thereby separating the first annular seal ring 3 from the rotatable runner 15. The gas exits at least one right-side axial groove 49 within a groove structure 41 and impinges the second annular seal ring 4 forming a thin-film layer 20 between the second annular seal ring 4 and rotatable runner 15, thereby separating the second annular seal ring 4 from the rotatable runner 15.

In some embodiments, it might be advantageous to direct a gas through the rotatable runner 15 or 35 rather than or in addition to between the first and second annular seal rings 3, 4 or 23, 24.

Referring now to FIGS. 14 and 15, a seal assembly 21 is shown in cross-sectional form disposed about a rotatable runner 35, the latter illustrated in side-view form, between a first compartment 58 and a second compartment 59. The first and second compartments 58, 59 could include a low pressure gas. Gas within the second compartment 59 could be at a higher pressure than the first compartment 58. One or both compartments 58, 59 could further include a lubricant. The annular seal housing 22 could include an optional windback thread 47 as illustrated in FIGS. 10-13.

The rotatable runner 35 includes a plurality of groove structures 41 and could further include an optional flange 60. The groove structures 41 are arranged circumferentially along the outer annular surface 36 of the rotatable runner 35 immediately adjacent to the seal assembly 21. The groove structures 41 are positioned so as to communicate a gas onto the annular seal rings 23, 24 as the rotatable runner 35 rotates with respect to the seal assembly 21. While FIG. 14 shows bifurcated groove structures 41, it is understood that all groove structures 17, 37, 41, 55 described herein are applicable to embodiments wherein a gas is directed through a rotatable runner 15, 35. An optional center ring 25 could be interposed between the first and second annular seal rings 23, 24, as otherwise described herein. It is likewise possible for the seal assembly 21 to not include a center ring 25, as also described herein.

A plurality of through holes 61 are separately disposed about the circumference of the rotatable runner 35, as represented in FIGS. 14 and 15. Each through hole 61 could traverse the rotatable runner 35 so as to allow passage of a gas along one side of the rotatable runner 35 to another side of the rotatable runner 35, preferably from a region adjacent to the inner portion of the rotatable runner 35 and onto the outer annular surface 36 of the rotatable runner 35 adjacent to the groove structures 41 and the first and second annular seal rings 23, 24.

The number, size, shape, location, and arrangement of the through holes 61 should allow communication of a gas through the rotatable runner 35 and onto the outer annular surface 36 so as to form a thin film 20 between the first and second annular seal rings 23, 24 and the rotatable runner 35. In some embodiments, it might be advantageous for each through hole 61 to be elongated along the central axis 44 and aligned therewith with one such through hole 61 interposed between each paired arrangement of diagonal grooves 43, as represented in FIG. 14. Other configurations are possible.

Each diagonal groove 43 further includes at least two steps 62a-62d. Although four steps 62a-62d are illustrated along each diagonal groove 43 in FIG. 14, it is understood that two or more such steps 62a-62d may reside along each diagonal groove 43. Each step 62a-62d corresponds to a change in the local depth of the diagonal groove 43 relative to the outer annular surface 36. For example, if a diagonal groove 43 includes two steps 62a, 62b, then one step 62a would have a first depth and another step 62b would have a second depth. The depths differ so that one depth is deeper and another depth is shallower. In preferred arrangements, the steps 62a-62d are arranged so that the change in local depth from one step to another step results in a stepwise variation along the length of each diagonal groove 43. Regardless of the exact arrangement, the steps 62a-62d are arranged consecutively to effect a stepwise variation of the depth along the length of each groove structure 41.

Referring again to FIGS. 14 and 15, a gas enters the through holes 61 along the rotatable runner 35 and is directed outward in the direction of the first and second annular seal rings 23, 24 with or without the center ring 25. The gas flows onto the rotatable runner 35 so as to impinge the outer annular surface 36 of the rotatable runner 35, preferably at or near the inlet ends 45. The gas is bifurcated by the groove structure 41 at the inlet ends 45 so that a first portion is directed into the left-side diagonal grooves 43 and a second portion is directed into the right-side diagonal grooves 43. The quantity and/or rate of gas communicated onto each of the annular seal rings 23, 24 may be the same or different. The gas traverses the respective diagonal grooves 43 and is redirected outward from the rotatable runner 35 at the outlet end 46 of each diagonal groove 43. The gas exits at least one left-side diagonal groove 43 within a groove structure 41 and impinges the first annular seal ring 23 forming a thin-film layer 20 between the first annular seal ring 23 and rotatable runner 35, thereby separating the first annular seal ring 23 from the rotatable runner 35. The gas exits at least one right-side diagonal groove 43 within a groove structure 41 and impinges the second annular seal ring 24 forming a thin-film layer 20 between the second annular seal ring 24 and rotatable runner 35, thereby separating the second annular seal ring 24 from the rotatable runner 35.

As described herein, a gas enters the diagonal or axial groove 19, 38, 43 49 so that some or all of the gas entering the groove 19, 38, 43, 49 either partially or completely traverses the length thereof. The inward flow of the gas results in a pressure gradient. The result is a pressure profile that steadily increases along the length of the groove 19, 38, 43, 49 so that the pressure downstream is generally higher than the pressure upstream. The pressure profile may be linear, non-linear, or a combination thereof.

Referring now to FIGS. 16 and 17, exemplary radial and axial grooves 19, 38, 43, 49 with four steps 62a-62d and five steps 62a-62e, respectively, are shown in an end-to-end configuration along the outer annular surface 16, 36 of a rotatable runner 15, 35. The steps 62a-62d, 62a-62e form a single pocket-like structure that opens outward in the direction of the outer annular surface 16, 36. FIG. 16 illustrates the stepwise orientation of the steps 62a-62d whereby the first step 62a, second step 62b, third step 62c, and fourth step 62d separately extend into the rotatable runner 15, 35 at four depths $h_a$, $h_b$, $h_c$, $h_d$, respectively. FIG. 17 illustrates the stepwise orientation of the steps 62a-62e whereby the first step 62a, second step 62b, third step 62c, fourth step 62d, and fifth step 62e separately extend into the rotatable runner 15, 35 at five depths $h_a$, $h_b$, $h_c$, $h_d$, $h_e$ respectively. In preferred embodiments, the depths $h_a$, $h_b$, $h_c$, $h_d$ should decrease incrementally ($h_a > h_b > h_c > h_d$) in the direction opposite of the rotational direction of the rotatable runner 15, 35. However, it is only required that at least one downstream step 62b-62d be at a depth less than one upstream step 62a-62c. In other embodiments, it might be advantageous to include at least one downstream step 62b-62e at a depth

$h_b$, $h_c$, $h_d$, $h_e$ greater than the depth $h_a$, $h_b$, $h_c$, $h_d$ of at least one upstream steps 62a-62d.

Referring again to FIGS. 16 and 17, the depths $h_a$, $h_b$, $h_c$, $h_d$, $h_e$ generally represent the distance from the outer annular surface 16, 36 to the base 63a-63e of each respective step 62a-62e, although other methods of determining the depths $h_a$, $h_b$, $h_c$, $h_d$, $h_e$ are possible. Each base 63a-63e is defined by a surface of generally planar extent along the rotatable runner 15, 35; however, other shapes are possible. The bases 63a-63e may be oriented so that two or more such bases 63a-63e are parallel, as shown in FIGS. 16 and 17. Regardless of the shape and orientation of each base 63a-63e, the transition from one step 62a-62d to another step 62b-62e defines a shoulder 64. The shoulder 64 represents an abrupt change or discontinuity in the depth profile between the inlet and outlet end of the diagonal groove 19, 38, 43 and the axial groove 49.

As the rotatable runner 15, 35 rotates, a gas adjacent to or communicated onto the rotatable runner 15, 35 flows into and along the steps 62a-62e in the direction opposite to the rotational direction of the rotatable runner 15, 35. In addition to or in place of the flow patterns implemented by the various groove structures 17, 37, 41, 55 as otherwise described herein, interaction between the gas and each shoulder 64 redirects the circumferential flow along each step 62a-62e so that some or all of the gas is locally directed radially outward toward the first and second annular seal rings 3, 4 or 23, 24. The result is turbulent flow adjacent to each shoulder 64 causing localized pressure discontinuities along the pressure profile described herein that enhance the thin-film layer 20 formed between the outer annular surface 16, 36 and first and second annular seal rings 3, 4 or 23, 24. The enhanced stiffness of the resultant thin-film layer 20 allows for higher operating differential pressures without the seal contacting the runner which extends seal life and lowers heat generation. The gas that leaks thru the thin-film layer 20 prevents or minimizes a lubricant from leaking into the sealing chamber and/or entering one or both lower pressure compartments 5, 6.

Referring now to FIG. 18, a groove 19, 38, 43, 49 is shown along the outer annular surface 16, 36 of a rotatable runner 15, 35. The groove 19, 38, 43, 49 is shown with steps 62a-62d arranged stepwise so that the deepest step 62a is at the leftmost or upstream end and the shallowest step 62d is at the rightmost or downstream end. The groove 19, 38, 43, 49 is defined to include a length (L) centered with the centerline 14, 34 so that one-half of the length (L) is to the left of the centerline 14, 34 and one-half of the length (L) is to the right of the centerline 14, 34. Each step 62a-62d has a unique depth (h) whereby the deepest groove defines the maximum depth ($h_{max}$) and the shallowest groove defines the minimum depth ($h_{min}$). The left end of the leftmost step 62a and the right end of the rightmost step 62d intersect the outer annular surface 16, 36 thereby defining a line 65. The line 65 intersects the radial distance (r), drawn from the centerline 14, 34, at a right angle.

The location of each base 63a-63e may be defined as by distance ratio (R) representing the radial distance (r) adjusted by the depth (h) of a step 62a-62e over the runner radius $r_r$. The distance ratio (R) is calculated by the equation

$$R = \frac{r-h}{r_r} \qquad (1)$$

where r is further calculated by the equation

$$r = \sqrt{r_r^2 - \left(\frac{L}{2}\right)^2} \qquad (2)$$

whereby the combination of equations (1) and (2) yields the equation

$$R = \frac{\sqrt{r_r^2 - \left(\frac{L}{2}\right)^2} - h}{r_r} \qquad (3)$$

For purpose of Equation (3), the length (L) corresponds to the chord or circumferential length as described in FIGS. 19a and 19b after all appropriate adjustments (if required) and the depth (h) of a groove 62a-62e corresponds to the vertical distance between line 65 and the base 63a-63e. The base 63a-63e is non-planar or angled, so a maximum depth or an average depth may be appropriate for calculational purposes. The lower and upper bounds for the distance ratio (R) for a groove 19, 38, 43, 49 are calculable for a given length (L) and runner radius ($r_r$) where the lower distance ratio ($R_L$) corresponds to the maximum depth ($h_{max}$) and the upper distance ratio ($R_U$) corresponds to the minimum depth ($h_{min}$).

Referring now to FIG. 20, the lower distance ratio ($R_L$) and upper distance ratio ($R_U$) are depicted for a variety of design variations for a runner radius ($r_r$) from 2.54-cm (1-inches) to 50.8-cm (20-inches). The lower distance ratio ($R_L$)

corresponds to a length (L) of 4.953-cm (1.95-inches) and a maximum step depth (h) of 0.254-cm (0.1-inches). The upper distance ratio ($R_U$) corresponds to a length (L) of 1.27-cm (0.5-inches) and a minimum step depth (h) of 0.0000254-cm (0.00001-inches). The resultant lines define the design space for potential distance ratios (R) when the runner radius ($r_r$) is from 2.54-cm (1-inch) to 50.8-cm (20-inches), the length (L) is from 1.27-cm (0.5-inches) to 4.953-cm (1.95-inches), and the depth (h) is from 0.0000254-cm (0.00001-inches) to 0.254-cm (0.1-inches).

The description above indicates that a great degree of flexibility is offered in terms of the present invention. Although various embodiments have been described in considerable detail with reference to certain preferred versions thereof, other versions are possible. Therefore, the scope of the appended claims should not be limited to the description of the preferred versions contained herein.

## 6. Industrial Applicability

The invention may be used within a variety of applications wherein a sealing assembly including a pair of annular seals is disposed about a translatable sealing surface between a pair of lower pressure compartments. One specific non-limiting example is a turbine engine wherein a seal assembly is disposed about a rotatable/translatable runner.

**Claims**

1.   A circumferential back-to-back seal assembly (1, 21) with bifurcated flow comprising:

(a) an annular seal housing (2, 22) disposed between a pair of compartments (5, 6 or 58, 59);
(b) a first annular seal ring (3, 23);
(c) a second annular seal ring (4, 24), said first annular seal ring (3, 23) and said second annular seal ring (4, 24) separately disposed within said annular seal housing (2, 22);
(d) a rotatable runner (15, 35) with a plurality of through holes (61), said first annular seal ring (3, 23) and said second annular seal ring (4, 24) disposed around said rotatable runner (15, 35); and
(e) a plurality of groove structures (17, 37, 41) disposed along an outer annular surface (16, 36) of said rotatable runner (15, 35), each said groove structure (17, 37, 41) extends radially inward into said rotatable runner (15, 35) from said outer annular surface (16, 36), a gas communicable onto said groove structures (17, 37, 41) via said through holes (61), each said groove structure (17, 37, 41) separates said gas so that a first portion of said gas is directed onto said first annular seal ring (3, 23) to form a first thin-film layer (20) between said rotatable runner (15, 35) and said first annular seal ring (3, 23) and a second portion of said gas is directed onto said second annular seal ring (4, 24) to form a second thin-film layer (20) between said rotatable runner (15, 35) and said second annular seal ring (4, 24), each said groove structure (17, 37, 41) has at least two grooves (19, 38, 43, 49);
**characterised by**
each said groove (19, 38, 43, 49) includes at least two adjoining steps (62a-62e) wherein each said adjoining step (62a-62e) bounded by said outer annular surface (16, 36) and a base (63a-63e) disposed at a depth (h) with respect to a line (65), said line (65) intersects said outer annular surface (16, 36) at an inlet end (45) and an outlet end (46) of said groove (19, 38, 43, 49), each said base (63a-63e) is non-planar whereby said depth (h) of each said base (63a-63e) represents either a maximum or an average, said depth (h) decreases from at least one said adjoining step (62a-d62e) to another said adjoining step (62a-62e) in the direction opposite to rotation, a shoulder (64) disposed between two said adjoining steps (62a-62e), said shoulder (64) being an abrupt change or discontinuity of said depth (h) between two said adjoining steps (62a-62e), said shoulder (64) locally redirects said gas outward toward said first annular seal ring (3, 23) or said second annular seal ring (4, 24) so that flow of said gas is turbulent, each said groove (19, 38, 43, 49) has a length (L) and disposed along said rotatable runner (15, 35) with a runner radius ($r_r$), each said groove (19, 38, 43, 49) outward opening and curved at said outer annular surface (16, 36), each said adjoining step (62a-62e) defined by a distance ratio (R) less than 1 determined by the equation

$$R = \frac{r - h}{r_r}$$

where

$$r = \sqrt{r_r^2 - \left(\frac{L}{2}\right)^2};$$

each said groove (19, 38, 43, 49) has one said adjoining step (62a-62e) with a minimum depth ($h_{min}$) and another said adjoining step (62a-62e) with a maximum depth ($h_{max}$), said distance ratio (R) for each said groove (19, 38, 43, 49) includes a lower distance ratio ($R_L$) when said depth (h) equals said maximum depth ($h_{max}$) and an upper distance ratio ($R_U$) when said depth (h) equals said minimum depth ($h_{min}$), said distance ratio (R) for each said adjoining step (62a-62e) within the range from said lower distance ratio ($R_L$) to said upper distance ratio ($R_U$).

2. The circumferential back-to-back seal assembly (1, 21) of claim 1, wherein said depth (h) increases from at least one said adjoining step (62a-62e) to another said adjoining step (62a-62e) in the direction opposite to rotation.

3. The circumferential back-to-back seal assembly (1, 21) of any one of the preceding claims, further comprising:
   (f) a plurality of springs (12) disposed between and directly contacts said first annular seal ring (3, 23) and said second annular seal ring (4, 24), said springs (12) separate said first annular seal ring (3, 23) and said second annular seal ring (4, 24).

4. The circumferential back-to-back seal assembly (1, 21) of any one of claims 1 to 2, further comprising:
   (f) a center ring (25) disposed within said annular seal housing (2, 22) between said first annular seal ring (3, 23) and said second annular seal ring (4, 24).

5. The circumferential back-to-back seal assembly (1, 21) of any one of claims 1 to 2, further comprising:

   (f) a center ring (25) disposed within said annular seal housing (2, 22) between said first annular seal ring (3, 23) and said second annular seal ring (4, 24); and
   (g) a plurality of springs (32, 33) disposed between said center ring (25) and each of said first annular seal ring (3, 23) and said second annular seal ring (4, 24), said springs (32, 33) separate said first annular seal ring (3, 23) and said second annular seal ring (4, 24) away from said center ring (25).

6. The circumferential back-to-back seal assembly (1, 21) of any one of the preceding claims, wherein said grooves (19, 38) disposed about and communicable with an apex (18, 40), said grooves (19, 38) disposed diagonally with respect to rotational direction of said rotatable runner (15, 35).

7. The circumferential back-to-back seal assembly (1, 21) of any one of claims 1 to 5, wherein said grooves (19) disposed about and communicable with an annular groove (39) along said outer annular surface (16, 36) of said rotatable runner (15, 35), said grooves (19) disposed diagonally with respect to rotational direction of said rotatable runner (15, 35).

8. The circumferential back-to-back seal assembly (1, 21) of any one of claims 1 to 5, said grooves (19, 38, 43) separately disposed about a central axis (44) aligned adjacent to said first annular seal ring (3, 23) and said second annular seal ring (4, 24), said grooves (19, 38, 43) disposed diagonally with respect to rotational direction of said rotatable runner (15, 35).

9. The circumferential back-to-back seal assembly (1, 21) of claim 8, wherein said grooves (19, 38, 43, 49) are communicable with a feed groove (42), said feed groove (42) directs said gas into said grooves (19, 38, 43, 49).

10. The circumferential back-to-back seal assembly (1, 21) of claim 9, wherein at least one said groove structure (17, 37, 41) has a secondary groove structure (55), said grooves (19, 38, 43, 49) vary either axially or circumferentially lengthwise.

11. The circumferential back-to-back seal assembly (1, 21) of any one of claims 1 to 5, wherein at least four said grooves (19, 38, 41) separately disposed about a central axis (44) aligned adjacent to said first annular seal ring (3, 23) and said second annular seal ring (4, 24), said grooves (19, 38, 41) disposed diagonally with respect to rotational direction of said rotatable runner (15, 35), at least two said grooves (19, 38, 41) communicable with a first feed groove (56) and at least two other said grooves (19, 38, 41) communicable with a second feed groove (57), said first feed groove (56) and said second feed groove (57) separate said gas into said grooves (19, 38, 41).

**12.** The circumferential back-to-back seal assembly (1, 21) of any one of claims 1 to 5, wherein said grooves (49) disposed about a central axis (44) aligned adjacent to said first annular seal ring (3, 23) and said second annular seal ring (4, 24), said grooves (49) disposed substantially parallel with respect to rotational direction of said rotatable runner (15, 35), said grooves (49) communicable with a feed groove (42), said feed groove (42) directs said gas into said grooves (49).

**13.** The circumferential back-to-back seal assembly (1, 21) of any one of the preceding claims, wherein adjacent said groove structures (17, 37, 41) vary widthwise.

**14.** The circumferential back-to-back seal assembly (1, 21) of any one of claims 1 to 5, wherein said grooves (19, 38, 43, 49) are separately disposed about a central axis (44) aligned adjacent to said first annular seal ring (3, 23) and said second annular seal ring (4, 24), adjacent said groove structures (17, 37, 41) vary in number of said grooves (19, 38, 43, 49).

**15.** The circumferential back-to-back seal assembly (1, 21) of any one of the preceding claims, wherein said annular seal housing (2, 22) includes a windback thread (47) adjacent to said compartment (5, 6 or 58, 59) including a lubricant, said windback thread (47) directs said lubricant away from said first annular seal ring (3, 23) and said second annular seal ring (4, 24), a plurality of slots (48) positioned along said rotatable runner (15, 35) cooperate with said windback thread (47) to sling said lubricant away from said first annular seal ring (3, 23) and said second annular seal ring (4, 24).

**Patentansprüche**

**1.** Umlaufende Paralleldichtungsanordnung (1, 21) mit verzweigter Strömung, umfassend:

(a) ein ringförmiges Dichtungsgehäuse (2, 22), das zwischen einem Paar Kammern (5, 6 oder 58, 59) angeordnet ist;
(b) einen ersten ringförmigen Dichtungsring (3, 23);
(c) einen zweiten ringförmigen Dichtungsring (4, 24), wobei der erste ringförmige Dichtungsring (3, 23) und der zweite ringförmige Dichtungsring (4, 24) separat innerhalb des ringförmigen Dichtungsgehäuses (2, 22) angeordnet sind;
(d) ein drehbares Laufrad (15, 35) mit einer Vielzahl von Durchgangslöchern (61), wobei der erste ringförmige Dichtungsring (3, 23) und der zweite ringförmige Dichtungsring (4, 24) um das drehbare Laufrad (15, 35) angeordnet sind; und
(e) eine Vielzahl von Rillenstrukturen (17, 37, 41), die entlang einer äußeren ringförmigen Fläche (16, 36) des drehbaren Laufrads (15, 35) angeordnet ist, wobei sich jede Rillenstruktur (17, 37, 41) radial nach innen in das drehbare Laufrad (15, 35) von der äußeren ringförmigen Fläche (16, 36) erstreckt, wobei ein Gas über die Durchgangslöcher (61) auf die Rillenstrukturen (17, 37, 41) kommuniziert werden kann, wobei jede Rillenstruktur (17, 37, 41) das Gas trennt, sodass ein erster Teil des Gases auf den ersten ringförmigen Dichtungsring (3, 23) geleitet wird, um eine erste Dünnfilmschicht (20) zwischen dem drehbaren Laufrad (15, 35) und dem ersten ringförmigen Dichtungsring (3, 23) zu bilden, und ein zweiter Teil des Gases auf den zweiten ringförmigen Dichtungsring (4, 24) geleitet wird, um eine zweite Dünnfilmschicht (20) zwischen dem drehbaren Laufrad (15, 35) und dem zweiten ringförmigen Dichtungsring (4, 24) zu bilden, wobei jede Rillenstruktur (17, 37, 41) mindestens zwei Rillen (19, 38, 43, 49) aufweist;
**dadurch gekennzeichnet, dass**
jede Rille (19, 38, 43, 49) mindestens zwei aneinandergrenzende Stufen (62a-62e) beinhaltet, wobei jede aneinandergrenzende Stufe (62a-62e) durch die äußere ringförmige Fläche (16, 36) und eine Basis (63a-63e) begrenzt ist, die in einer Tiefe (h) in Bezug auf eine Linie (65) angeordnet ist, wobei die Linie (65) die äußere ringförmige Fläche (16, 36) an einem Einlassende (45) und einem Auslassende (46) der Rille (19, 38, 43, 49) schneidet, wobei jede Basis (63a-63e) nichtplanar ist, wodurch die Tiefe (h) jeder Basis (63a-63e) entweder ein Maximum oder einen Durchschnitt darstellt, wobei die Tiefe (h) von mindestens einer aneinandergrenzenden Stufe (62a-62e) zu einer anderen aneinandergrenzenden Stufe (62a-62e) in der Gegenrichtung zur Drehung abnimmt, wobei ein Absatz (64) zwischen zwei aneinandergrenzenden Stufen (62a-62e) angeordnet ist, wobei der Absatz (64) eine abrupte Änderung oder Unterbrechung der Tiefe (h) zwischen zwei aneinandergrenzenden Stufen (62a-62e) ist, wobei der Absatz (64) das Gas lokal in Richtung des ersten ringförmigen Dichtungsrings (3, 23) oder des zweiten ringförmigen Dichtungsrings (4, 24) umleitet, sodass die Strömung des Gases turbulent ist, wobei jede Rille (19, 38, 43, 49) eine Länge (L) aufweist und entlang des drehbaren Laufrads (15, 35) mit

einem Laufradradius ($r_r$) angeordnet ist, wobei sich jede Rille (19, 38, 43, 49) nach außen öffnet und an der äußeren ringförmigen Fläche (16, 36) gekrümmt ist, wobei jede aneinandergrenzende Stufe (62a-62e) durch ein Abstandsverhältnis (R) unter 1 definiert ist, das bestimmt ist durch die Gleichung

$$R = \frac{r - h}{r_r}$$

wobei

$$r = \sqrt{r_r^2 - (\tfrac{L}{2})^2};$$

wobei jede Rille (19, 38, 43, 49) eine aneinandergrenzende Stufe (62a-62e) mit einer minimalen Tiefe ($h_{min}$) und eine andere aneinandergrenzende Stufe (62a-62e) mit einer maximalen Tiefe ($h_{max}$) aufweist, wobei das Abstandsverhältnis (R) für jede Rille (19, 38, 43, 49) ein unteres Abstandsverhältnis ($R_L$) beinhaltet, wenn die Tiefe (h) gleich der maximalen Tiefe ($h_{max}$) ist, und ein oberes Abstandsverhältnis ($R_U$) beinhaltet, wenn die Tiefe (h) gleich der minimalen Tiefe ($h_{min}$) ist, wobei das Abstandsverhältnis (R) für jede aneinandergrenzende Stufe (62a-62e) innerhalb des Bereichs von dem unteren Abstandsverhältnis ($R_L$) zu dem oberen Abstandsverhältnis ($R_U$) liegt.

2. Umlaufende Paralleldichtungsanordnung (1, 21) nach Anspruch 1, wobei die Tiefe (h) von mindestens einer aneinandergrenzenden Stufe (62a-62e) zu einer anderen aneinandergrenzenden Stufe (62a-62e) in der Gegenrichtung zur Drehung zunimmt.

3. Umlaufende Paralleldichtungsanordnung (1, 21) nach einem der vorhergehenden Ansprüche, ferner umfassend:
(f) eine Vielzahl von Federn (12), die zwischen dem ersten ringförmigen Dichtungsring (3, 23) und dem zweiten ringförmigen Dichtungsring (4, 24) angeordnet ist und diese direkt berührt, wobei die Federn (12) den ersten ringförmigen Dichtungsring (3, 23) und den zweiten ringförmigen Dichtungsring (4, 24) trennen.

4. Umlaufende Paralleldichtungsanordnung (1, 21) nach einem der Ansprüche 1 bis 2, ferner umfassend:
(f) einen Zentrierring (25), der innerhalb des ringförmigen Dichtungsgehäuses (2, 22) zwischen dem ersten ringförmigen Dichtungsring (3, 23) und dem zweiten ringförmigen Dichtungsring (4, 24) angeordnet ist.

5. Umlaufende Paralleldichtungsanordnung (1, 21) nach einem der Ansprüche 1 bis 2, ferner umfassend:

(f) einen Zentrierring (25), der innerhalb des ringförmigen Dichtungsgehäuses (2, 22) zwischen dem ersten ringförmigen Dichtungsring (3, 23) und dem zweiten ringförmigen Dichtungsring (4, 24) angeordnet ist; und
(g) eine Vielzahl von Federn (32, 33), die zwischen dem Zentrierring (25) und jedem des ersten ringförmigen Dichtungsrings (3, 23) und des zweiten ringförmigen Dichtungsrings (4, 24) angeordnet ist, wobei die Federn (32, 33) den ersten ringförmigen Dichtungsring (3, 23) und den zweiten ringförmigen Dichtungsring (4, 24) von dem Zentrierring (25) weg trennen.

6. Umlaufende Paralleldichtungsanordnung (1, 21) nach einem der vorhergehenden Ansprüche, wobei die Rillen (19, 38) um eine Spitze (18, 40) angeordnet sind und mit dieser kommunizieren können, wobei die Rillen (19, 38) diagonal in Bezug auf die Drehrichtung des drehbaren Laufrads (15, 35) angeordnet sind.

7. Umlaufende Paralleldichtungsanordnung (1, 21) nach einem der Ansprüche 1 bis 5, wobei die Rillen (19) um eine ringförmige Rille (39) entlang der äußeren ringförmigen Fläche (16, 36) des drehbaren Laufrads (15, 35) angeordnet sind und mit dieser kommunizieren können, wobei die Rillen (19) diagonal in Bezug auf die Drehrichtung des drehbaren Laufrads (15, 35) angeordnet sind.

8. Umlaufende Paralleldichtungsanordnung (1, 21) nach einem der Ansprüche 1 bis 5, wobei die Rillen (19, 38, 43) separat um eine Mittelachse (44) angeordnet sind, die benachbart zu dem ersten ringförmigen Dichtungsring (3, 23) und dem zweiten ringförmigen Dichtungsring (4, 24) ausgerichtet ist, wobei die Rillen (19, 38, 43) diagonal in Bezug auf die Drehrichtung des drehbaren Laufrads (15, 35) angeordnet sind.

9. Umlaufende Paralleldichtungsanordnung (1, 21) nach Anspruch 8, wobei die Rillen (19, 38, 43, 49) mit einer Zuführrille (42) kommunizieren können, wobei die Zuführrille (42) das Gas in die Rillen (19, 38, 43, 49) leitet.

10. Umlaufende Paralleldichtungsanordnung (1, 21) nach Anspruch 9, wobei mindestens eine Rillenstruktur (17, 37, 41) eine sekundäre Rillenstruktur (55) aufweist, wobei die Rillen (19, 38, 43, 49) entweder axial oder umlaufend der Länge nach variieren.

11. Umlaufende Paralleldichtungsanordnung (1, 21) nach einem der Ansprüche 1 bis 5, wobei mindestens vier Rillen (19, 38, 41) separat um eine Mittelachse (44) angeordnet sind, die benachbart zu dem ersten ringförmigen Dichtungsring (3, 23) und dem zweiten ringförmigen Dichtungsring (4, 24) ausgerichtet ist, wobei die Rillen (19, 38, 41) diagonal in Bezug auf die Drehrichtung des drehbaren Laufrads (15, 35) angeordnet sind, wobei mindestens zwei Rillen (19, 38, 41) mit einer ersten Zuführrille (56) kommunizieren können und mindestens zwei andere Rillen (19, 38, 41) mit einer zweiten Zuführrille (57) kommunizieren können, wobei die erste Zuführrille (56) und die zweite Zuführrille (57) das Gas in die Rillen (19, 38, 41) trennen.

12. Umlaufende Paralleldichtungsanordnung (1, 21) nach einem der Ansprüche 1 bis 5, wobei die Rillen (49) um eine Mittelachse (44) angeordnet sind, die benachbart zu dem ersten ringförmigen Dichtungsring (3, 23) und dem zweiten ringförmigen Dichtungsring (4, 24) ausgerichtet ist, wobei die Rillen (49) im Wesentlichen parallel in Bezug auf die Drehrichtung des drehbaren Laufrads (15, 35) angeordnet sind, wobei die Rillen (49) mit einer Zuführrille (42) kommunizieren können, wobei die Zuführrille (42) das Gas in die Rillen (49) leitet.

13. Umlaufende Paralleldichtungsanordnung (1, 21) nach einem der vorhergehenden Ansprüche, wobei die benachbarten Rillenstrukturen (17, 37, 41) der Breite nach variieren.

14. Umlaufende Paralleldichtungsanordnung (1, 21) nach einem der Ansprüche 1 bis 5, wobei die Rillen (19, 38, 43, 49) separat um eine Mittelachse (44) angeordnet sind, die benachbart zu dem ersten ringförmigen Dichtungsring (3, 23) und dem zweiten ringförmigen Dichtungsring (4, 24) ausgerichtet ist, wobei die benachbarten Rillenstrukturen (17, 37, 41) hinsichtlich der Anzahl der Rillen (19, 38, 43, 49) variieren.

15. Umlaufende Paralleldichtungsanordnung (1, 21) nach einem der vorhergehenden Ansprüche, wobei das ringförmige Dichtungsgehäuse (2, 22) ein gegenläufiges Gewinde (47) beinhaltet, das zu der Kammer (5, 6 oder 58, 59) benachbart ist, die ein Schmiermittel beinhaltet, wobei das gegenläufige Gewinde (47) das Schmiermittel von dem ersten ringförmigen Dichtungsring (3, 23) und dem zweiten ringförmigen Dichtungsring (4, 24) weg leitet, wobei eine Vielzahl von Schlitzen (48), die entlang des drehbaren Laufrads (15, 35) positioniert ist, mit dem gegenläufigen Gewinde (47) zusammenwirkt, um das Schmiermittel von dem ersten ringförmigen Dichtungsring (3, 23) und dem zweiten ringförmigen Dichtungsring (4, 24) weg zu schleudern.

## Revendications

1. Ensemble joint circonférentiel dos-à-dos (1, 21) à écoulement bifurqué comprenant :

(a) un logement de joint annulaire (2, 22) disposé entre une paire de compartiments (5, 6 ou 58, 59) ;
(b) une première bague d'étanchéité annulaire (3, 23) ;
(c) une seconde bague d'étanchéité annulaire (4, 24), ladite première bague d'étanchéité annulaire (3, 23) et ladite seconde bague d'étanchéité annulaire (4, 24) étant disposées séparément à l'intérieur dudit logement de joint annulaire (2, 22) ;
(d) un canal rotatif (15, 35) avec une pluralité d'orifices traversants (61), ladite première bague d'étanchéité annulaire (3, 23) et ladite seconde bague d'étanchéité annulaire (4, 24) étant disposées autour dudit canal rotatif (15, 35) ; et
(e) une pluralité de structures de rainures (17, 37, 41) disposées le long d'une surface annulaire externe (16, 36) dudit canal rotatif (15, 35), chacune desdites structures de rainures (17, 37, 41) s'étendant radialement vers l'intérieur dans ledit canal rotatif (15, 35) à partir de ladite surface annulaire externe (16, 36), un gaz pouvant communiquer sur lesdites structures de rainures (17, 37, 41) par l'intermédiaire desdits orifices traversants (61), chacune desdites structures de rainures (17, 37, 41) séparant ledit gaz de sorte qu'une première partie dudit gaz est dirigée sur ladite première bague d'étanchéité annulaire (3, 23) pour former une première couche à film mince (20) entre ledit canal rotatif (15, 35) et ladite première bague d'étanchéité annulaire (3, 23) et une seconde partie dudit gaz est dirigée sur ladite seconde bague d'étanchéité annulaire (4, 24) pour former une seconde couche à film mince (20) entre ledit canal rotatif (15, 35) et ladite seconde bague d'étanchéité annulaire (4, 24), chacune desdites structures de rainures (17, 37, 41) comportant au moins deux rainures (19, 38, 43, 49) ;
**caractérisé en ce que**
chacune desdites rainures (19, 38, 43, 49) comprend au moins deux marches adjacentes (62a à 62e), chacune desdites marches adjacentes (62a à 62e) étant limitée par ladite surface annulaire externe (16, 36) et une base (63a à 63e) disposée à une profondeur (h) par rapport à une ligne (65), ladite ligne (65) coupant ladite surface annulaire externe (16, 36) au niveau d'une extrémité d'entrée (45) et d'une extrémité de sortie (46) de ladite rainure (19, 38, 43, 49), chacune desdites bases (63a à 63e) étant non plane, moyennant quoi ladite profondeur (h) de chacune desdites bases (63a à 63e) représente soit un maximum soit une moyenne, ladite profondeur (h) décroît d'au moins l'une desdites marches adjacentes (62a à d62e) à une autre desdites marches adjacentes (62a à 62e) dans le sens contraire de celui de la rotation, un épaulement (64) disposé entre deux desdites marches adjacentes (62a à 62e), ledit épaulement (64) étant un changement ou une discontinuité abrupt(e) de ladite profondeur (h) entre deux desdites marches adjacentes (62a à 62e), ledit épaulement (64) redirigeant localement ledit gaz vers l'extérieur en direction de ladite première bague d'étanchéité annulaire (3, 23) ou ladite seconde bague d'étanchéité annulaire (4, 24) de sorte que l'écoulement dudit gaz est turbulent, chacune desdites rainures (19, 38, 43, 49) ayant une longueur (L) et étant disposée le long dudit canal rotatif (15, 35) avec un rayon ($r_r$) de canal, chacune desdites rainures (19, 38, 43, 49) s'ouvrant vers l'extérieur et étant incurvée au niveau de ladite surface annulaire externe (16, 36), chacune desdites marches adjacentes (62a à 62e) étant définie par un rapport de distances (R) inférieur à 1 déterminé par l'équation

$$R = \frac{r - h}{r_r}$$

dans laquelle :

$$r = \sqrt{r_r^2 - \left(\frac{L}{2}\right)^2};$$

chacune desdites rainures (19, 38, 43, 49) comporte l'une desdites marches adjacentes (62a à 62e) avec une profondeur minimale ($h_{min}$) et une autre desdites marches adjacentes (62a à 62e) avec une profondeur maximale ($h_{max}$), ledit rapport de distances (R) pour chacune desdites rainures (19, 38, 43, 49) comprenant un rapport de distances inférieur ($R_L$) lorsque ladite profondeur (h) est égale à ladite profondeur maximale ($h_{max}$) et un rapport de distances supérieur (Ru) lorsque ladite profondeur (h) est égale à ladite profondeur minimale ($h_{min}$), ledit rapport de distances (R) pour chacune desdites marches adjacentes (62a à 62e) se situant dans la plage allant dudit rapport de distances inférieur ($R_L$) audit rapport de distances supérieur ($R_U$).

2. Ensemble joint circonférentiel dos-à-dos (1, 21) selon la revendication 1, dans lequel ladite profondeur (h) augmente d'au moins l'une desdites marches adjacentes (62a à 62e) à une autre desdites marches adjacentes (62a à 62e) dans le sens contraire de celui de la rotation.

3. Ensemble joint circonférentiel dos-à-dos (1, 21) selon l'une quelconque des revendications précédentes, comprenant en outre :
(f) une pluralité de ressorts (12) disposés entre ladite première bague d'étanchéité annulaire (3, 23) et ladite seconde bague d'étanchéité annulaire (4, 24), et directement en contact avec celles-ci, lesdits ressorts (12) séparant ladite première bague d'étanchéité annulaire (3, 23) et ladite seconde bague d'étanchéité annulaire (4, 24).

4. Ensemble joint circonférentiel dos-à-dos (1, 21) selon l'une quelconque des revendications 1 à 2, comprenant en outre :
(f) une bague centrale (25) disposée à l'intérieur dudit logement de joint annulaire (2, 22) entre ladite première bague d'étanchéité annulaire (3, 23) et ladite seconde bague d'étanchéité annulaire (4, 24).

5. Ensemble joint circonférentiel dos-à-dos (1, 21) selon l'une quelconque des revendications 1 à 2, comprenant en outre :

(f) une bague centrale (25) disposée à l'intérieur dudit logement de joint annulaire (2, 22) entre ladite première bague d'étanchéité annulaire (3, 23) et ladite seconde bague d'étanchéité annulaire (4, 24) ; et

(g) une pluralité de ressorts (32, 33) disposés entre ladite bague centrale (25) et chacune de ladite première bague d'étanchéité annulaire (3, 23) et de ladite seconde bague d'étanchéité annulaire (4, 24), lesdits ressorts (32, 33) séparant ladite première bague d'étanchéité annulaire (3, 23) et ladite seconde bague d'étanchéité annulaire (4, 24) en les éloignant de ladite bague centrale (25).

6. Ensemble joint circonférentiel dos-à-dos (1, 21) selon l'une quelconque des revendications précédentes, dans lequel lesdites rainures (19, 38) sont disposées autour d'un sommet (18, 40), et peuvent communiquer avec celui-ci, lesdites rainures (19, 38) étant disposées en diagonale par rapport au sens de rotation dudit canal rotatif (15, 35).

7. Ensemble joint circonférentiel dos-à-dos (1, 21) selon l'une quelconque des revendications 1 à 5, dans lequel lesdites rainures (19) sont disposées autour d'une rainure annulaire (39), et peuvent communiquer avec celle-ci le long de ladite surface annulaire externe (16, 36) dudit canal rotatif (15, 35), lesdites rainures (19) étant disposées en diagonale par rapport au sens de rotation dudit canal

8. Ensemble joint circonférentiel dos-à-dos (1, 21) selon l'une quelconque des revendications 1 à 5, lesdites rainures (19, 38, 43) étant disposées séparément autour d'un axe central (44) aligné de manière adjacente à ladite première bague d'étanchéité annulaire (3, 23) et à ladite seconde bague d'étanchéité annulaire (4, 24), lesdites rainures (19, 38, 43) étant disposées en diagonale par rapport au sens de rotation dudit canal rotatif (15, 35).

9. Ensemble joint circonférentiel dos-à-dos (1, 21) selon la revendication 8, dans lequel lesdites rainures (19, 38, 43, 49) peuvent communiquer avec une rainure d'alimentation (42), ladite rainure d'alimentation (42) dirigeant ledit gaz dans lesdites rainures (19, 38, 43, 49).

10. Ensemble joint circonférentiel dos-à-dos (1, 21) selon la revendication 9, dans lequel au moins l'une desdites structures de rainures (17, 37, 41) a une structure de rainure secondaire (55), lesdites rainures (19, 38, 43, 49) variant soit axialement soit circonférentiellement dans le sens de la longueur.

11. Ensemble joint circonférentiel dos-à-dos (1, 21) selon l'une quelconque des revendications 1 à 5, dans lequel au moins quatre desdites rainures (19, 38, 41) sont disposées séparément autour d'un axe central (44) aligné de manière adjacente à ladite première bague d'étanchéité annulaire (3, 23) et à ladite seconde bague d'étanchéité annulaire (4, 24), lesdites rainures (19, 38, 41) étant disposées en diagonale par rapport au sens de rotation dudit canal rotatif (15, 35), au moins deux desdites rainures (19, 38, 41) pouvant communiquer avec une première rainure d'alimentation (56) et au moins deux autres desdites rainures (19, 38, 41) pouvant communiquer avec une seconde rainure d'alimentation (57), ladite première rainure d'alimentation (56) et ladite seconde rainure d'alimentation (57) séparant ledit gaz dans lesdites rainures (19, 38, 41).

12. Ensemble joint circonférentiel dos-à-dos (1, 21) selon l'une quelconque des revendications 1 à 5, dans lequel lesdites rainures (49) sont disposées autour d'un axe central (44) aligné de manière adjacente à ladite première bague d'étanchéité annulaire (3, 23) et à ladite seconde bague d'étanchéité annulaire (4, 24), lesdites rainures (49) étant disposées de manière sensiblement parallèle au sens de rotation dudit canal rotatif (15, 35), lesdites rainures (49) pouvant communiquer avec une rainure d'alimentation (42), ladite rainure d'alimentation (42) dirigeant ledit gaz dans lesdites rainures (49).

13. Ensemble joint circonférentiel dos-à-dos (1, 21) selon l'une quelconque des revendications précédentes, dans lequel lesdites structures de rainures (17, 37, 41) adjacentes varient dans le sens de la largeur.

14. Ensemble joint circonférentiel dos-à-dos (1, 21) selon l'une quelconque des revendications 1 à 5, dans lequel lesdites rainures (19, 38, 43, 49) sont disposées séparément autour d'un axe central (44) aligné de manière adjacente à ladite première bague d'étanchéité annulaire (3, 23) et à ladite seconde bague d'étanchéité annulaire (4, 24), lesdites structures de rainures (17, 37, 41) adjacentes ayant un nombre variable desdites rainures (19, 38, 43, 49).

15. Ensemble joint circonférentiel dos-à-dos (1, 21) selon l'une quelconque des revendications précédentes, dans lequel ledit logement de joint annulaire (2, 22) comprend un filetage d'enroulement arrière (47) de manière adjacente audit compartiment (5, 6 ou 58, 59) comprenant un lubrifiant, ledit filetage d'enroulement arrière (47) dirigeant ledit lubrifiant à distance de ladite première bague d'étanchéité annulaire (3, 23) et de ladite seconde bague d'étanchéité annulaire (4, 24), une pluralité de fentes (48) positionnées le long dudit canal rotatif (15, 35) coopérant avec ledit filetage d'enroulement arrière (47) pour éloigner ledit lubrifiant de ladite première bague d'étanchéité annulaire (3, 23) et de ladite seconde bague d'étanchéité annulaire (4, 24).

High Pressure
Gas

*Fig. 1*

*Fig. 2*

**Fig. 3**

High Pressure
Gas

**Fig. 4**

*Fig. 5*

*Fig. 6*

*Fig. 7*

Fig. 8

**Fig. 9**

*Fig. 10*

High Pressure
Gas

*Fig. 11*

High Pressure
Gas

AIR FLOW

ROTATION

Translation

**Fig. 12**

High Pressure
Gas

1    9    2

3    4
13    47

20    AIR FLOW    20
42    49
45
15    16    41
46    6
62a    $W_2$
62b    62b    ROTATION
62c    62c
5    62d    62d
$W_1$    41
14
50    44

Translation

*Fig. 13*

38

*Fig. 14*

*Fig. 15*

$$h_a > h_b > h_c > h_d$$

*Fig. 16*

$$h_a > h_b > h_c > h_d$$

$$h_e > \text{at least } h_d$$

*Fig. 17*

*Fig. 18*

$$L = L_d \, Cos \, (\alpha)$$

## Fig. 19a

## Fig. 19b

Fig. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150049968 A, Garrison
- US 20110049809 A
- US 20080284105 A, Vasagar
- US 6142478 A, Pecht